# EUROPEAN PATENT APPLICATION

(11) **EP 4 614 328 A1**
(43) Date of publication of application: **10.09.2025**
(21) Application number: 25161920.1
(22) Date of filing: 05.03.2025
(51) Int. Cl.: G06F 9/54

(54) **SYSTEMS AND METHODS FOR ALERTS AND NOTIFICATIONS IN AN ADVANCED DISTRIBUTION PLATFORM**

(30) Priority: 08.03.2024 US 202418599388
(71) Applicant: Ingram Micro Inc., Irvine, CA 92612 (US)
(72) Inventor: SAHOO, Sanjib, Naperville, IL 60564 (US)
(74) Representative: Zoebisch, Michael

(57) **Abstract**

Computerized systems and methods are provided for managing alerts and notifications within a technology distribution platform. A Single Pane of Glass User Interface (SPoG UI) presents notifications to users enabling interaction and customization. A Real-Time Data Mesh (RTDM) collects, filters, enriches, and standardizes event data from multiple sources into a uniform format. An Event Adapter formats data to be processed by a Notification Engine, configured to determine one or more notification triggers and generate alert content based on established rules and algorithms. A logging and user interaction module tracks user interactions with notifications. User feedback is processed by an Advanced Analytics and Machine Learning (AAML) Module configured to dynamically adapt notification logic. Notification content and delivery mechanisms are refined by a Distribution Module to ensure effective dissemination across various communication channels.

## Description

### CROSS REFERENCE TO RELATED APPLICATIONS

This application is a Continuation-In-Part (CIP) of U.S. Patent Application No. 18/341,714, filed on June 26, 2023 and U.S. Patent Application No. 18/349,836, filed on July 10, 2023. This application also claims the benefit of U.S. Provisional Application No. 63/513,073, filed on July 11, 2023; U.S. Provisional Application No. 63/513,078, filed on July 11, 2023; U.S. Provisional Application No. 63/515,075, filed on July 21, 2023; and U.S. Provisional Application No. 63/515,076, filed on July 21, 2023. Each of these applications is incorporated herein by reference in their entireties.

### BACKGROUND

Traditional ordering processes in distribution and supply-chain platforms are marred with inefficiencies, delays, and inaccuracies. In the conventional landscape, multiple systems and vendors usually perform each activity independently, from creating a bill of materials to registering deals, applying pricing, generating quotes, and submitting orders. This approach leads to operational inefficiencies and a heightened likelihood of errors.

Enterprise Resource Planning (ERP) systems have served as the mainstay in managing business processes, including distribution and supply chain. These systems act as central repositories where different departments such as finance, human resources, and inventory management can access and share real-time data. While ERPs are comprehensive, they present several challenges in today's complex distribution and supply chain environment. One of the primary challenges is data fragmentation. Data silos across different departments or even separate ERP systems make real-time visibility difficult to achieve. Users lack a comprehensive view of key distribution and supply chain metrics, which adversely affects decision-making processes.

Moreover, ERP systems often do not offer effective data integration capabilities. Traditional ERP systems are not designed to integrate efficiently with external systems or even between different modules within the same ERP suite. This design results in a cumbersome and error-prone manual process to transfer data between systems and affects the flow of information throughout the supply chain. Data inconsistencies occur when information exists in different formats across systems, hindering accurate data analysis and leading to uninformed decision-making.

Data inconsistency presents another challenge. When data exists in different formats or units across departments or ERPs, standardizing this data for meaningful analysis becomes a painstaking process. Businesses often resort to time-consuming manual processes for data transformation and validation, which further delays decision-making. Additionally, traditional ERP systems often lack the capabilities to handle large volumes of data effectively. These systems struggle to provide timely insights for operational improvements, particularly problematic for businesses dealing with complex and expansive distribution and supply chain networks.

Data security is another concern, especially considering the sensitive nature of supply chain data, which includes customer details, pricing, and contracts. Ensuring compliance with global regulations on data security and governance adds an additional layer of complexity. Traditional ERP systems often lack robust security features sufficient to adapt to the continually evolving landscape of cybersecurity threats and compliance requirements.

### BRIEF SUMMARY OF THE INVENTION

Automated Alerts and Notifications processes are designed to address inefficiencies in the technology distribution industry by integrating various systems and activities into a unified interface. This integration enables the management and dissemination of information - from operational alerts to service updates - across a technology distribution platform. The transformation into this unified communication model facilitates the entire notification management process, enhancing efficiency in activities like user interaction, dynamic content customization, and subscription notification management. The platform ensures data security and compliance while effectively integrating and accelerating notification processes.

In the global distribution industry, challenges such as inefficient communication channels, real-time updates, and the transition to more user-centered models necessitate innovative solutions. Traditional notification methods are increasingly insufficient, particularly with shifts in user engagement and regulatory requirements. By integrating functionalities for real-time alerts, user interaction management, and visibility into system performance, the platform supports a shift from traditional communication methods to a flexible, user-centric notification model.

According to some embodiments, an Alert Optimization module can be configured to incorporate algorithms to optimize notification content and delivery based on real-time data and user preferences. The system includes a module that, integrated with Real-Time Data Mesh (RTDM) and Single Pane of Glass User Interface (SPoG UI), optimizes the dissemination of information. Using advanced algorithms, it adapts notifications based on real-time system performance data and user interaction patterns, enhancing the relevance and timeliness of communications.

In a non-limiting example, a User Engagement Recommendation Engine employs algorithms to offer personalized notification options to users. A Content Customization Engine, using models like multi-variable linear regression or Random Forest, predicts and adjusts notification content based on actual user engagement, system events, and individual user settings.

In an embodiment, a Notification Management and Real-Time Interaction module(s) operably connected with the RTDM and SPoG UI manages the lifecycle of user notifications. The module(s) optimize notification delivery based on real-time data, using algorithms to dynamically adjust content and user interaction options. The system includes a content engine for message customization, adapting to variables like user feedback and system status.

In some embodiments, the system enables users to personalize their notification settings with a single click via the SPoG UI. It includes a module for checking user preferences and aggregating interaction options based on current system status, facilitating the notification management process.

Additionally, or alternatively, the system employs validation algorithms, such as support vector machines, to ensure the precision of notification delivery. It synchronizes real-time data from various sources, ensuring consistent and up-to-date information across the notification system.

Embodiments disclosed herein integrate multiple systems, automate processes, and validate to automate the management of information across a technology distribution platform. By implementing intelligent rules and validations, the system efficiently executes complex tasks, reducing time and errors associated with manual notification management. The system's adaptability ensures it remains current and evolves to meet operational and user demands.

The system uses data-driven methods to automate the customization and management of notification packages based on user interaction patterns. This includes assembling various alerts and updates into coherent communication flows that align with individual user behaviors and preferences. The system generates user profiles based on comprehensive data analysis, encompassing aspects like digital engagement and response patterns. This data informs the customization of notification packages that meet specific user requirements in areas such as system updates, service alerts, and operational changes.

The system incorporates advanced algorithms to analyze user data, including historical interaction patterns, to discern preferences and anticipate communication needs. This facilitates the creation of notification packages that are highly relevant and engaging. Automated notification bundling integrates information and updates from different system components, ensuring each communication package meets the user's informational and interaction needs. Automated Alerts and Notifications generation can include combinations like system alerts with compatible service updates and operational changes, designed to enhance user awareness and operational efficiency.

### Single Pane of Glass

The Single Pane of Glass (SPoG) can provide a comprehensive solution that is configured to address these multifaceted challenges. It can be configured to provide a holistic, user-friendly, and efficient platform that facilitates the distribution process.

According to some embodiments, SPoG can be configured to address supply chain and distribution management by enhancing visibility and control over the supply chain process. Through real-time tracking and analytics, SPoG can deliver valuable insights into inventory levels and the status of goods, ensuring that the process of supply chain and distribution management is handled efficiently.

According to some embodiments, SPoG can integrate multiple touchpoints into a single platform to emulate a direct consumer channel into a distribution platform. This integration provides a unified direct channel for consumers to interact with distributors, significantly reducing the complexity of the supply chain and enhancing the overall customer experience.

SPoG offers an innovative solution for improved inventory management through advanced forecasting capabilities. These predictive analytics can highlight demand trends, guiding companies in managing their inventory more effectively and mitigating the risks of stockouts or overstocks.

According to some embodiments, SPoG can include a global compliance database. Updated in real-time, this database enables distributors to stay abreast with the latest international laws and regulations. This feature significantly reduces the burden of manual tracking, ensuring smooth and compliant cross-border transactions.

According to some embodiments, to facilitate SKU management and product localization, SPoG integrates data from various OEMs into a single platform. This not only ensures data consistency but also significantly reduces the potential for errors. Furthermore, it provides capabilities to manage and distribute localized SKUs efficiently, thereby aligning with specific market needs and requirements.

According to some embodiments, SPoG is its highly configurable and user-friendly platform. Its intuitive interface allows users to easily access and purchase technology, thereby aligning with the expectations of the new generation of tech buyers.

Moreover, SPoG's advanced analytics capabilities offer invaluable insights that can drive strategy and decision-making. It can track and analyze trends in real-time, allowing companies to stay ahead of the curve and adapt to changing market conditions.

SPoG's flexibility and scalability make it a future-proof solution. It can adapt to changing business needs, allowing companies to expand or contract their operations as needed without significant infrastructural changes.

SPoG's innovative approach to resolving the challenges in the distribution industry makes it an invaluable tool. By enhancing supply chain visibility, facilitating inventory management, ensuring compliance, simplifying SKU management, and delivering a superior customer experience, it offers a comprehensive solution to the complex problems that have long plagued the distribution sector. Through its implementation, distributors can look forward to increased efficiency, reduced errors, and improved customer satisfaction, leading to sustained growth in the ever-evolving global market.

### Real-Time Data Mesh (RTDM)

The platform can be include implementation(s) of a Real-Time Data Mesh (RTDM), according to some embodiments. RTDS offers an innovative solution to address these challenges. RTDM, a distributed data architecture, enables real-time data availability across multiple sources and touchpoints. This feature enhances supply chain visibility, allowing for efficient management and enabling distributors to handle disruptions more effectively.

RTDM's predictive analytics capability offers a solution for efficient inventory control. By providing insights into demand trends, it aids companies in managing inventory, reducing risks of overstocking or stockouts.

RTDM's global compliance database, updated in real-time, ensures distributors are current with international regulations. It significantly reduces the manual tracking burden, enabling cross-border transactions.

The RTDM also simplifies SKU management and localization by integrating data from various OEMs, ensuring data consistency and reducing error potential. Its capabilities for managing and distributing localized SKUs align with specific market needs efficiently.

The RTDM enhances customer experience with its intuitive interface, allowing easy access and purchase of technology, meeting the expectations of the new generation of tech buyers.

### Advantages of SPoG and RTDM Integration

Integrating SPoG platform with the RTDM provides a myriad of advantages. Firstly, it offers a holistic solution to the longstanding problems in the distribution industry. With the RTDM's capabilities, SPoG can enhance supply chain visibility, facilitate inventory management, ensure compliance, simplify SKU management, and deliver a superior customer experience.

The real-time tracking and analytics offered by RTDM improve SPoG's ability to manage the supply chain and inventory effectively. It provides accurate and current information, enabling distributors to make informed decisions quickly.

Integrating SPoG with RTDM also ensures data consistency and reduces errors in SKU management. By providing a centralized platform for managing data from various OEMs, it simplifies product localization and helps to align with market needs.

The global compliance database of RTDM, integrated with SPoG, facilitates and compliant cross-border transactions. It also reduces the burden of manual tracking, saving significant time and resources.

In some embodiments, a distribution platform incorporates SPoG and RTDM to provide an improved and comprehensive distribution system. The platform can leverage the advantages of a distribution model, addresses its existing challenges, and positions it for sustained growth in the ever-evolving global market.

### BRIEF DESCRIPTION OF THE DRAWINGS/FIGURES

FIG. 1 illustrates one embodiment of an operating environment of a distribution platform, referred to as System in this embodiment.
FIG. 2 illustrates one embodiment of an operating environment of the distribution platform, according to some embodiments.
FIG. 3 illustrates an embodiment of a system for distribution management.
FIG. 4 depicts a system for automated alerts and notification management, according to an embodiment.
FIG. 5 illustrates an RTDM module, according to an embodiment.
FIG. 6 illustrates a SPoG UI, according to an embodiment.
FIG. 7 illustrates a system for automated alerts and notification management, according to an embodiment.
FIG. 8 is a flow diagram of a method for automated alerts and notification management, according to some embodiments of the present disclosure.
FIG. 9 is a flow diagram for automated alerts and notification management in a technology distribution platform, according to some embodiments of the present disclosure.
FIG. 10 is a flow diagram for user interaction with notifications in a technology distribution platform, according to some embodiments of the present disclosure.
FIG. 11 is a block diagram of example components of device, according to some embodiments of the present disclosure.
FIGS. 12A to 12Q depict various screens and functionalities of the SPoG UI, according to some embodiments.

### DETAILED DESCRIPTION OF THE INVENTION

Embodiments may be implemented in hardware, firmware, software, or any combination thereof. Embodiments may also be implemented as instructions stored on a machine-readable medium, which may be read and executed by one or more processors. A machine-readable medium may include any mechanism for storing or transmitting information in a form readable by a machine (e.g., a computing device). For example, a machine-readable medium may include read only memory (ROM); random access memory (RAM); magnetic disk storage media; optical storage media; flash memory devices, and others. Further, firmware, software, routines, instructions may be described herein as performing certain actions. However, it should be appreciated that such descriptions are merely for convenience and that such actions in fact result from computing devices, processors, controllers, or other devices executing the firmware, software, routines, instructions, etc.

It should be understood that the operations shown in the exemplary methods are not exhaustive and that other operations can be performed as well before, after, or between any of the illustrated operations. In some embodiments of the present disclosure, the operations can be performed in a different order and/or vary.

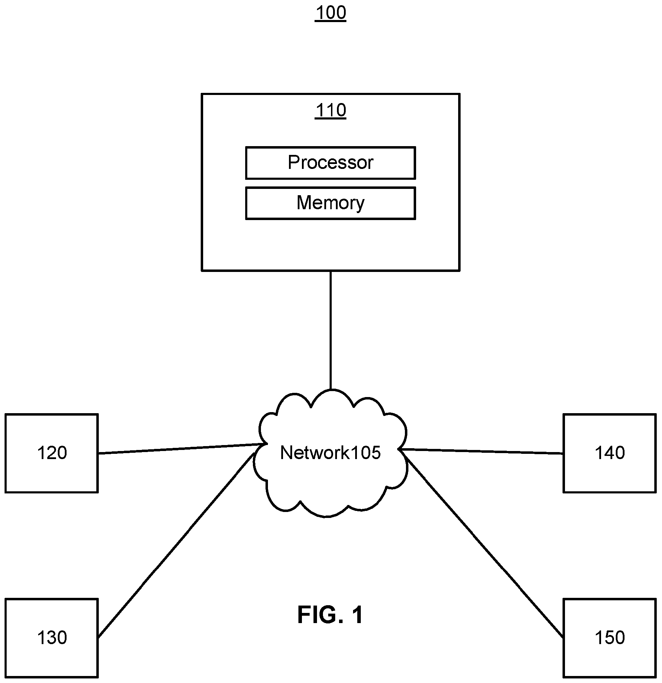

FIG. 1 illustrates an operating environment 100 of a distribution platform, referred to as System 110 in this embodiment. System 110 operates within the context of an information technology (IT) distribution model, catering to various users such as customers 120, end customers 130, vendors 140, resellers 150, and other entities involved in the distribution process. This operating environment encompasses a broad range of characteristics and dynamics that contribute to the success and efficiency of the distribution platform.

Customers 120 within the operating environment of System 110 represent businesses or individuals seeking IT solutions to meet their specific needs. These customers may require a diverse range of IT products such as hardware components, software applications, networking equipment, or cloud-based services. System 110 provides customers with a user-friendly interface, allowing them to browse, search, and select the most suitable IT solutions based on their requirements. Customers can also access real-time data and analytics through System 110, empowering them to make informed decisions and optimize their IT infrastructure.

End customers 130 can be the ultimate beneficiaries of the IT solutions provided by System 110. They may include businesses or individuals who utilize IT products and services to enhance their operations, productivity, or daily activities. End customers rely on System 110 to access a wide array of IT solutions, ensuring they have access to the latest technologies and innovations in the market. System 110 enables end customers to track their orders, receive updates on delivery status, and access customer support services, thereby enhancing their overall experience.

Vendors 140 can encompass manufacturers, distributors, and suppliers who offer a diverse range of IT products and services. System 110 acts as a centralized platform for vendors to showcase their offerings, manage inventory, and facilitate transactions with customers and resellers. Vendors can leverage System 110 to streamline their supply chain operations, manage pricing and promotions, and gain insights into customer preferences and market trends. By integrating with System 110, vendors can expand their reach, access new markets, and enhance their overall visibility and competitiveness.

Resellers 150 can be intermediaries within the distribution model who bridge the gap between vendors and customers. They play a vital role in the IT distribution ecosystem by connecting customers with the right IT solutions from various vendors. Resellers may include retailers, value-added resellers (VARs), system integrators, or managed service providers. System 110 enables resellers to access a comprehensive catalog of IT solutions, manage their sales pipeline, and provide value-added services to customers. By leveraging System 110, resellers can enhance their customer relationships, optimize their product offerings, and increase their revenue streams.

Within the operating environment of System 110, there can be various dynamics and characteristics that contribute to its effectiveness. These dynamics include real-time data exchange, integration with existing enterprise systems, scalability, and flexibility. System 110 ensures that relevant data can be exchanged in real-time between users, enabling accurate decision-making and timely actions. Integration with existing enterprise systems such as enterprise resource planning (ERP) systems, customer relationship management (CRM) systems, and warehouse management systems allows for communication and interoperability, eliminating data silos and enabling end-to-end visibility.

System 110 can achieve scalability and flexibility. It can accommodate the growing demands of the IT distribution model, whether it involves an expanding customer base, an increasing number of vendors, or a wider range of IT products and services. System 110 can be configured to handle large-scale data processing, storage, and analysis, ensuring that it can support the evolving needs of the distribution platform. Additionally, System 110 leverages a technology stack that includes .NET, Java, and other suitable technologies.

In summary, the operating environment of System 110 within the IT distribution model encompasses customers 120, end customers 130, vendors 140, resellers 150, and other entities involved in the distribution process. System 110 serves as a centralized platform that facilitates efficient collaboration, communication, and transactional processes between these users. By leveraging real-time data exchange, integration, scalability, and flexibility, System 110 empowers users to optimize their operations, enhance customer experiences, and drive business success within the IT distribution ecosystem.

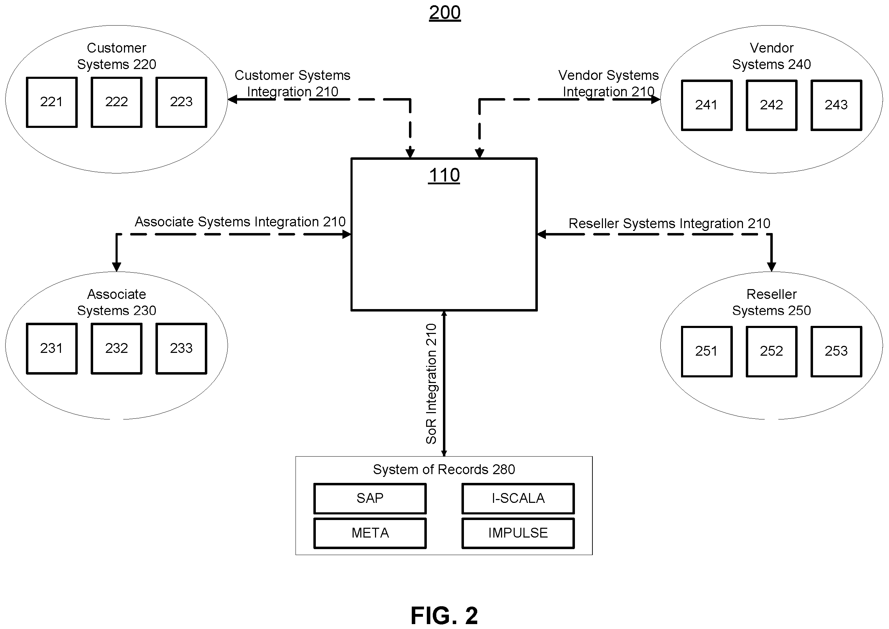

FIG. 2 illustrates the operating environment 200 of the distribution platform, which can be an embodiment of operating environment 100 of FIG. 1. This environment can include integration points 210, which enable data flow and connectivity among various systems like customer systems 220, vendor systems 240, reseller systems 260, and other entities for the implementation of a comprehensive Alerts and Notifications system. The operating environment 200 is designed to support real-time, event-driven notifications using advanced data processing and AI/ML technologies.

The Alerts and Notifications system within environment 200 involves real-time monitoring and alerting of critical events such as inventory changes, pricing updates, and delivery tracking. Data from diverse sources, including customer interactions and service metrics, is aggregated from systems like CRM and analytics tools into the Real-Time Data Mesh (RTDM). This data is then processed and standardized by the RTDM, serving as a dynamic repository for immediate access and dissemination of notifications.

Advanced AI algorithms in this system perform real-time analytics and predictive notifications. Machine learning models, including neural networks and decision trees, are employed to process and interpret large volumes of data, enabling timely and relevant notifications. The system leverages ML algorithms for intelligent alert generation, employing techniques like ensemble learning and reinforcement learning to refine notification processes continually.

In this operating environment, System 110 serves as the central hub for coordinating the Alerts and Notifications process, bridging customer systems 220, vendor systems 240, reseller systems 260, and other pertinent entities. It integrates communication and data exchange, ensuring a cohesive and efficient notification experience across the distribution network. The environment utilizes a hybrid architecture combining RESTful APIs and WebSockets, ensuring real-time data exchange and synchronization with SSL/TLS protocols for data security.

The integration with customer systems 220, such as CRM and ERP platforms, is critical for the alerts system. This allows for the real-time dissemination of notifications relevant to customers' specific needs and preferences, enhancing decision-making and operational efficiency.

The data exchange among customer systems 220, vendor systems 240, and reseller systems 260 can incorporate ETL processes, ensuring data consistency and reliability for alert generation. Predefined business rules and logic dictate the flow and processing of data, with advanced mapping and transformation tools harmonizing disparate data formats for unified notification delivery.

Integration with associate systems 230 through integration point 210 supports the efficiency of the Alerts and Notifications process by providing market and product data for generating accurate and timely alerts.

The vendor system integration ensures that vendors connected to System 110 can receive real-time notifications on key metrics such as inventory levels and pricing changes, essential for maintaining up-to-date information in a dynamic market environment.

Reseller System Integration: Through integration point 210, reseller systems 260 connect to System 110, gaining access to real-time notifications on product availability, pricing updates, and customer order statuses, enabling them to manage customer relationships and sales processes more effectively.

Other Entity System Integration: Integration point 210 also connects other entities in the distribution process, facilitating efficient collaboration and distribution through the real-time exchange of alerts and notifications. This integration is pivotal for maintaining a responsive and informed distribution ecosystem.

System 110 employs AI and ML capabilities to automate and optimize the Alerts and Notifications process according to dynamic market conditions and individual user preferences. This ensures timely and relevant notifications across the distribution network.

Integration points 210 also connect with System of Records 280, allowing for additional data management and integration. These systems, encompassing ERP and CRM platforms, provide a rich data source for the Alerts and Notifications system, enabling real-time updates and ensuring accurate information dissemination.

The integration points 210 within operating environment 200 are established through standardized protocols and APIs, ensuring compatibility and secure data transfer. System 110 employs protocols like RESTful APIs, SOAP, or GraphQL for effective communication and data exchange.

To ensure secure access and data protection, System 110 incorporates authentication and authorization mechanisms, utilizing technologies like OAuth or JSON Web Tokens (JWT). This maintains data integrity and confidentiality across the notification network.

The data flow within operating environment 200 enables users to operate within a connected ecosystem of real-time alerts and notifications. Data generated at various stages of the distribution process is shared among customer systems 220, vendor systems 240, reseller systems 260, and other entities, enhancing operational efficiency and decision-making.

System 110 can leverage advanced technologies like Typescript, NodeJS, ReactJS, .NET Core, C#, etc., to support the integration points 210 and communication within the operating environment 200.

System 110's architecture also facilitates the processing, harmonization, and real-time accessibility of data across the distribution network, empowering users with immediate access to relevant, real-time information for timely decision-making.

Each of the customer systems, such as customer systems 220, is configured to receive and interact with the alerts and notifications, facilitating immediate action and response to real-time information. This includes devices like desktops, laptops, mobile phones, and smartwatches, each capable of presenting the alerts through various user interfaces.

The components of customer systems are configured using applications like web browsers running on central processing units, such as Intel Pentium processors or similar. The distribution platform (System 110) and its components are similarly configured, ensuring integrated interaction and notification management.

Machine-readable storage media contain instructions to program computers to execute the processes of the Alerts and Notifications system. The computer code for operating and configuring the platform can be stored on various memory media and transmitted over conventional network connections using standard communication protocols.

The implementation of the system can be performed in various programming languages and executed on different platforms, depending on the specific requirements of the distribution platform and the environment in which it operates.

Thus, operating environment 200 couples the distribution platform with integration points 210 and data flow, enabling efficient collaboration and streamlined distribution processes through a responsive Alerts and Notifications system. This system significantly enhances the responsiveness and operational efficiency of the entire distribution network.

In conclusion, FIG. 2 depicts a dynamic and interconnected operating environment 200 where real-time alerts and notifications are central to the distribution process, facilitating informed decisions and efficient operations across various entities in the supply chain. The integration of advanced AI/ML technologies, real-time data processing, and a comprehensive alerts mechanism positions System 110 as a pivotal component in modernizing and optimizing distribution and supply chain management.

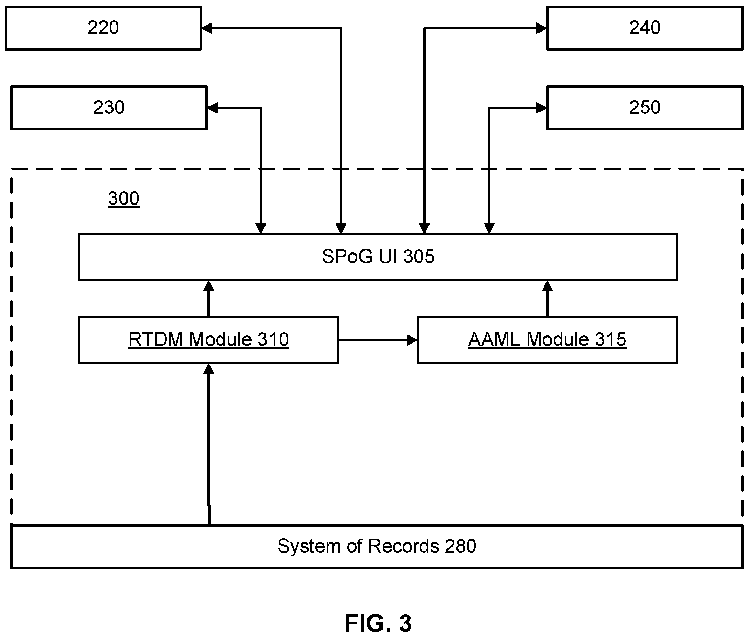

FIG. 3 illustrates a system 300 for supply chain and distribution management. System 300 (FIG. 3) is a supply chain and distribution management solution configured to address the challenges faced by fragmented distribution ecosystems in the global distribution industry. System 300 can include several interconnected components and modules that work in harmony to optimize supply chain and distribution operations, enhance collaboration, and drive business efficiency.

The Single Pane of Glass (SPoG) UI 305 serves as a centralized user interface, providing users with a unified view of the entire supply chain. It consolidates information from various sources and presents real-time data, analytics, and functionalities tailored to the specific roles and responsibilities of users. By offering a customizable and intuitive dashboard-style layout, the SPoG UI enables users to access relevant information and tools, empowering them to make data-driven decisions and efficiently manage their supply chain and distribution activities.

For example, a logistics manager can use the SPoG UI to monitor the status of shipments, track delivery routes, and view real-time inventory levels across multiple warehouses. They can visualize data through interactive charts and graphs, such as a map displaying the current location of each shipment or a bar chart showing inventory levels by product category. By having a unified view of the supply chain, the logistics manager can identify bottlenecks, optimize routes, and ensure timely delivery of goods.

The SPoG UI 305 integrates with other modules of System 300, facilitating real-time data exchange, synchronized operations, and streamlined workflows. Through API integrations, data synchronization mechanisms, and event-driven architectures, SPoG UI 305 ensures smooth information flow and enables collaborative decision-making across the distribution ecosystem. SPoG UI 305 is designed with a user-centric approach, featuring an intuitive and responsive layout. It utilizes front-end technologies to render dynamic and interactive data visualizations. Customizable dashboards allow users to tailor their views based on specific roles and requirements. The UI supports drag-and-drop functionality for ease of use, and its adaptive design ensures compatibility across various devices and platforms. Advanced filtering and search capabilities enable users to efficiently navigate and access relevant supply chain data and insights.

For instance, when a purchase order is generated in the SPoG UI, the system automatically updates the inventory levels, triggers a notification to the warehouse management system, and initiates the shipping process. This integration enables efficient order fulfillment, reduces manual errors, and enhances overall supply chain visibility.

The Real-Time Data Mesh (RTDM) module 310 is another component of System 300, responsible for ensuring the flow of data within the distribution ecosystem. It aggregates data from multiple sources, harmonizes it, and ensures its availability in real-time.

In a distribution network, the RTDM module collects data from various systems, including inventory management systems, point-of-sale terminals, and customer relationship management systems. It harmonizes this data by aligning formats, standardizing units of measurement, and reconciling any discrepancies. The harmonized data can be then made available in real-time, allowing users to access accurate and current information across the supply chain.

The RTDM module 310 can be configured to capture changes in data across multiple transactional systems in real-time. It employs a Change Data Capture (CDC) mechanism that constantly monitors the transactional systems, detecting any updates or modifications. The CDC component can be specifically configured to work with various transactional systems, including legacy ERP systems, Customer Relationship Management (CRM) systems, and other enterprise-wide systems, ensuring compatibility and flexibility for businesses operating in diverse environments.

By having access to real-time data, users can make timely decisions and respond quickly to changing market conditions. For example, if the RTDM module detects a sudden spike in demand for a particular product, it can trigger alerts to the production team, enabling them to adjust manufacturing schedules and prevent stockouts.

The RTDM module 310 facilitates data management within supply chain operations. It enables real-time harmonization of data from multiple sources, freeing vendors, resellers, customers, and end customers from constraints imposed by legacy ERP systems. This enhanced flexibility supports improved efficiency, customer service, and innovation.

Another component of System 300 is the Advanced Analytics and Machine Learning (AAML) module 315. Leveraging powerful analytics tools and algorithms such as Apache Spark, TensorFlow, or scikit-learn, the AAML module extracts valuable insights from the collected data. It enables advanced analytics, predictive modeling, anomaly detection, and other machine learning capabilities.

For instance, the AAML module can analyze historical sales data to identify seasonal patterns and predict future demand. It can generate forecasts that help optimize inventory levels, ensure stock availability during peak seasons, and minimize excess inventory costs. By leveraging machine learning algorithms, the AAML module automates repetitive tasks, predicts customer preferences, and optimizes supply chain processes.

In addition to demand forecasting, the AAML module can provide insights into customer behavior, enabling targeted marketing campaigns and personalized customer experiences. For example, by analyzing customer data, the module can identify cross-selling or upselling opportunities and recommend relevant products to individual customers.

Furthermore, the AAML module can analyze data from various sources, such as social media feeds, customer reviews, and market trends, to gain a deeper understanding of consumer sentiment and preferences. This information can be used to inform product development decisions, identify emerging market trends, and adapt business strategies to meet evolving consumer expectations.

System 300 emphasizes integration and interoperability to connect with existing enterprise systems such as ERP systems, warehouse management systems, and customer relationship management systems. By establishing connections and data flows between these systems, System 300 enables smooth data exchange, process automation, and end-to-end visibility across the supply chain. Integration protocols, APIs, and data connectors facilitate communication and interoperability among different modules and components, creating a holistic and connected distribution ecosystem.

The implementation and deployment of System 300 can be tailored to meet specific business needs. It can be deployed as a cloud-native solution using containerization technologies like Docker and orchestration frameworks like Kubernetes. This approach ensures scalability, easy management, and efficient updates across different environments. The implementation process involves configuring the system to align with specific supply chain requirements, integrating with existing systems, and customizing the modules and components based on the business's needs and preferences.

System 300 for supply chain and distribution management is a comprehensive and innovative solution that addresses the challenges faced by fragmented distribution ecosystems. It combines the power of the SPoG UI 305, the RTDM module 310, and the AAML module 315, along with integration with existing systems. System 300 can be configured to provide end-to-end visibility, data-driven decision-making, and optimized supply chain operations. The examples and options provided in this description are non-limiting and can be customized to meet specific industry requirements, driving efficiency and success in supply chain and distribution management.

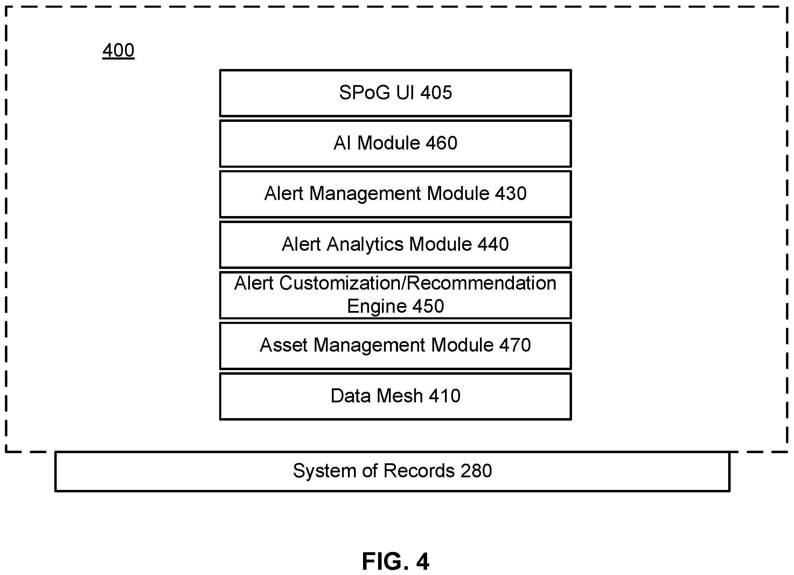

FIG. 4 depicts an embodiment of System 400, primarily focused on the Alerts and Notifications system within a technology distribution platform. This system integrates the Single Pane of Glass User Interface (SPoG UI 405), Real-Time Data Mesh (RTDM 410), and advanced AI/ML technologies (AI Module 460). System 400 is configured for integration with existing reseller systems, ensuring efficient data exchange, synchronization, and real-time alerting functionalities.

The SPoG UI 405, serving as the primary user interface, is pivotal for the Alerts and Notifications system. It provides users with an interactive platform to receive and manage alerts related to various distribution activities. This interface displays real-time data from the Data Mesh 410 and allows users to configure notification preferences, access alert histories, and interact with real-time alerts. SPoG UI 405, developed using responsive web technologies, is accessible across multiple device types, ensuring users stay informed regardless of their device.

Data Mesh 410 forms the core of the Alerts and Notifications system. It aggregates and harmonizes data from diverse sources, including ERPs, vendor platforms, and third-party databases, ensuring that operational modules within System 400 access consistent and current information. This harmonization is critical for generating accurate, timely alerts and notifications, particularly in dynamic distribution environments.

The AI Module 460 in System 400 is tailored to enhance the Alerts and Notifications system. It uses machine learning algorithms and predictive modeling to identify patterns and trends that trigger alerts. This module dynamically processes data from Data Mesh 410 to generate real-time notifications about critical events like inventory changes, pricing updates, and shipment statuses, enhancing decision-making and response times for users.

In some embodiments, AI Module 460 incorporates deep learning neural networks for pattern recognition, essential for predictive alerts in the distribution process. The module also uses decision trees and clustering algorithms to categorize and segment alert types, ensuring users receive relevant and customized notifications.

Real-time processing capabilities of AI Module 460, based on data from Data Mesh 410, enable the system to adapt notifications to current market conditions and user behaviors. This includes employing advanced analytics for proactive alert generation, ensuring users are informed promptly of critical changes or updates in the distribution network.

AI Module 460's reinforcement learning algorithms continually refine the notification process, ensuring that alerts remain relevant and actionable over time. The module also uses natural language processing (NLP) techniques to interpret user feedback, further enhancing the alert customization process.

Data Mesh 410 provides real-time tracking of data for the Alerts and Notifications system, driving predictive and responsive alerts. Data Mesh 410 can be implemented in System 400 to enable tracking usage patterns and market feedback, facilitating a responsive alert system in a dynamic distribution environment.

Predictive analytics tools within AI Module 460 use time series forecasting and optimization algorithms to anticipate future trends and demand in the distribution network, informing users through predictive alerts. This proactive approach to notifications enables users to prepare and respond effectively to changing market conditions.

The Alert Management Module 430 in System 400 oversees the lifecycle of alerts and notifications, managing their initiation, modification, and dissemination. It ensures that alerts are delivered in compliance with user preferences and contractual agreements, maintaining a high level of relevance and accuracy.

Alert Analytics Module 440 in System 400 is configured to support the Alerts and Notifications system by providing financial and usage insights based on alert data. This module helps in understanding the impact of alerts on user behavior and subscription changes, offering strategic insights for business decision-making.

The Alert Customization and Recommendation Engine 450, integrated with SPoG UI 405 and AI Module 460 enables personalizing the Alerts and Notifications system. It recommends alert configurations and preferences based on user input and historical data analysis, enhancing the user experience by delivering tailored alert content.

Asset Tracking Module 470 in System 400 supports the Alerts and Notifications system by tracking and managing the allocation of assets relevant to the alerts. This includes monitoring inventory levels and ensuring that alerts related to asset availability are accurate and timely.

Thereby, System 400 transforms the traditional distribution model by leveraging a responsive Alerts and Notifications system. This system, powered by real-time data processing, AI-driven analytics, and user customization capabilities, ensures that users are proactively informed and can make timely decisions based on real-time alerts and notifications in the technology distribution environment.

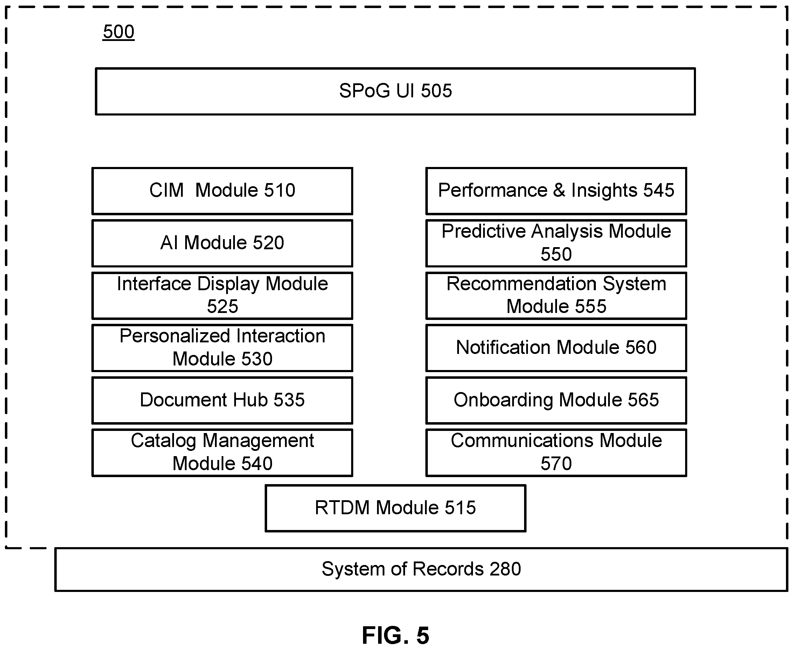

FIG. 5 depicts an embodiment of an advanced distribution platform including System 500 for managing a complex distribution network, which can be an embodiment of System 300, and provides a technology distribution platform for optimizing the management and operation of distribution networks. System 500 includes several interconnected modules, each serving specific functions and contributing to the overall efficiency of supply chain operations. In some embodiments, these modules can include SPoG UI 505, CIM 510, RTDM module 515, AI module 520, Interface Display Module 525, Personalized Interaction Module 530, Document Hub 535, Catalog Management Module 540, Performance and Insight Markers Display 545, Predictive Analytics Module 550, Recommendation System Module 555, Notification Module 560, Self-Onboarding Module 565, and Communication Module 570.

System 500, as an embodiment of System 300, can use a range of technologies and algorithms to enable supply chain and distribution management. These technologies and algorithms facilitate efficient data processing, personalized interactions, real-time analytics, secure communication, and effective management of documents, catalogs, and performance metrics.

The SPoG UI 505, in some embodiments, serves as the central interface within System 500, providing users with a unified view of the entire distribution network. It utilizes frontend technologies such as ReactJS, TypeScript, and Node.js to create interactive and responsive user interfaces. These technologies enable the SPoG UI 505 to deliver a user-friendly experience, allowing users to access relevant information, navigate through different modules, and perform tasks efficiently.

The CIM 510, or Customer Interaction Module, employs algorithms and technologies such as Oracle Eloqua, Adobe Target, and Okta to manage customer relationships within the distribution network. These technologies enable the module to handle customer data securely, personalize customer experiences, and provide access control for users.

The RTDM module 515, or Real-Time Data Mesh module, is a component of System 500 that ensures the smooth flow of data across the distribution ecosystem. It utilizes technologies such as Apache Kafka, Apache Flink, or Apache Pulsar for data ingestion, processing, and stream management. These technologies enable the RTDM module 515 to handle real-time data streams, process large volumes of data, and ensure low-latency data processing. Additionally, the module employs Change Data Capture (CDC) mechanisms to capture real-time data updates from various transactional systems, such as legacy ERP systems and CRM systems. This capability allows users to access current and accurate information for informed decision-making.

The AI module 520 within System 500 can use advanced analytics and machine learning algorithms, including Apache Spark, TensorFlow, and scikit-learn, to extract valuable insights from data. These algorithms enable the module to automate repetitive tasks, predict demand patterns, optimize inventory levels, and improve overall supply chain efficiency. For example, the AI module 520 can utilize predictive models to forecast demand, allowing users to optimize inventory management and minimize stockouts or overstock situations.

The Interface Display Module 525 focuses on presenting data and information in a clear and user-friendly manner. It utilizes technologies such as HTML, CSS, and JavaScript frameworks like ReactJS to create interactive and responsive user interfaces. These technologies allow users to visualize data using various data visualization techniques, such as graphs, charts, and tables, enabling efficient data comprehension, comparison, and trend analysis.

The Personalized Interaction Module 530 utilizes customer data, historical trends, and machine learning algorithms to generate personalized recommendations for products or services. It employs technologies like Adobe Target, Apache Spark, and TensorFlow for data analysis, modeling, and delivering targeted recommendations. For example, the module can analyze customer preferences and purchase history to provide personalized product recommendations, enhancing customer satisfaction and driving sales.

The Document Hub 535 serves as a centralized repository for storing and managing documents within System 500. It utilizes technologies like SeeBurger and Elastic Cloud for efficient document management, storage, and retrieval. For instance, the Document Hub 535 can employ SeeBurger's document management capabilities to categorize and organize documents based on their types, such as contracts, invoices, product specifications, or compliance documents, allowing users to easily access and retrieve relevant documents when needed.

The Catalog Management Module 540 enables the creation, management, and distribution of current product catalogs. It ensures that users have access to the latest product information, including specifications, pricing, availability, and promotions. Technologies like Kentico and Akamai can be employed to facilitate catalog updates, content delivery, and caching. For example, the module can use Akamai's content delivery network (CDN) to deliver catalog information to users quickly and efficiently, regardless of their geographical location.

The Performance and Insight Markers Display 545 collects, analyzes, and visualizes real-time performance metrics and insights related to supply chain operations. It utilizes tools like Splunk and Datadog to enable effective performance monitoring and provide actionable insights. For instance, the module can utilize Splunk's log analysis capabilities to identify performance bottlenecks in the supply chain, enabling users to take proactive measures to optimize operations.

The Predictive Analytics Module 550 employs machine learning algorithms and predictive models to forecast demand patterns, optimize inventory levels, and enhance overall supply chain efficiency. It utilizes technologies such as Apache Spark and TensorFlow for data analysis, modeling, and prediction. For example, the module can utilize TensorFlow's deep learning capabilities to analyze historical sales data and predict future demand, allowing users to optimize inventory levels and minimize costs.

The Recommendation System Module 555 focuses on providing intelligent recommendations to users within the distribution network. It generates personalized recommendations for products or services based on customer data, historical trends, and machine learning algorithms. Technologies like Adobe Target and Apache Spark can be employed for data analysis, modeling, and delivering targeted recommendations. For instance, the module can use Adobe Target's recommendation engine to analyze customer preferences and behavior, and deliver personalized product recommendations across various channels, enhancing customer engagement and driving sales.

The Notification Module 560 enables the distribution of real-time notifications to users regarding important events, updates, or alerts within the supply chain. It utilizes technologies like Apigee X and TIBCO for message queues, event-driven architectures, and notification delivery. For example, the module can utilize TIBCO's messaging infrastructure to send real-time notifications to users' devices, ensuring timely and relevant information dissemination.

The Self-Onboarding Module 565 facilitates the onboarding process for new users entering the distribution network. It provides guided steps, tutorials, or documentation to help users become familiar with the system and its functionalities. Technologies such as Okta and Kentico can be employed to ensure secure user authentication, access control, and self-learning resources. For instance, the module can utilize Okta's identity and access management capabilities to securely onboard new users, providing them with appropriate access permissions and guiding them through the system's functionalities.

The Communication Module 570 enables communication and collaboration within System 500. It provides channels for users to interact, exchange messages, share documents, and collaborate on projects. Technologies like Apigee Edge and Adobe Launch can be employed to facilitate secure and efficient communication, document sharing, and version control. For example, the module can utilize Apigee Edge's API management capabilities to ensure secure and reliable communication between users, enabling them to collaborate effectively.

Thereby, System 500 can incorporate various modules that utilize a diverse range of technologies and algorithms to optimize supply chain and distribution management. These modules, including SPoG UI 505, CIM 510, RTDM module 515, AI module 520, Interface Display Module 525, Personalized Interaction Module 530, Document Hub 535, Catalog Management Module 540, Performance and Insight Markers Display 545, Predictive Analytics Module 550, Recommendation System Module 555, Notification Module 560, Self-Onboarding Module 565, and Communication Module 570, work together to provide end-to-end visibility, data-driven decision-making, personalized interactions, real-time analytics, and streamlined communication within the distribution network. The incorporation of specific technologies and algorithms enables efficient data management, secure communication, personalized experiences, and effective performance monitoring, contributing to enhanced operational efficiency and success in supply chain and distribution management.

### REAL TIME DATA MESH

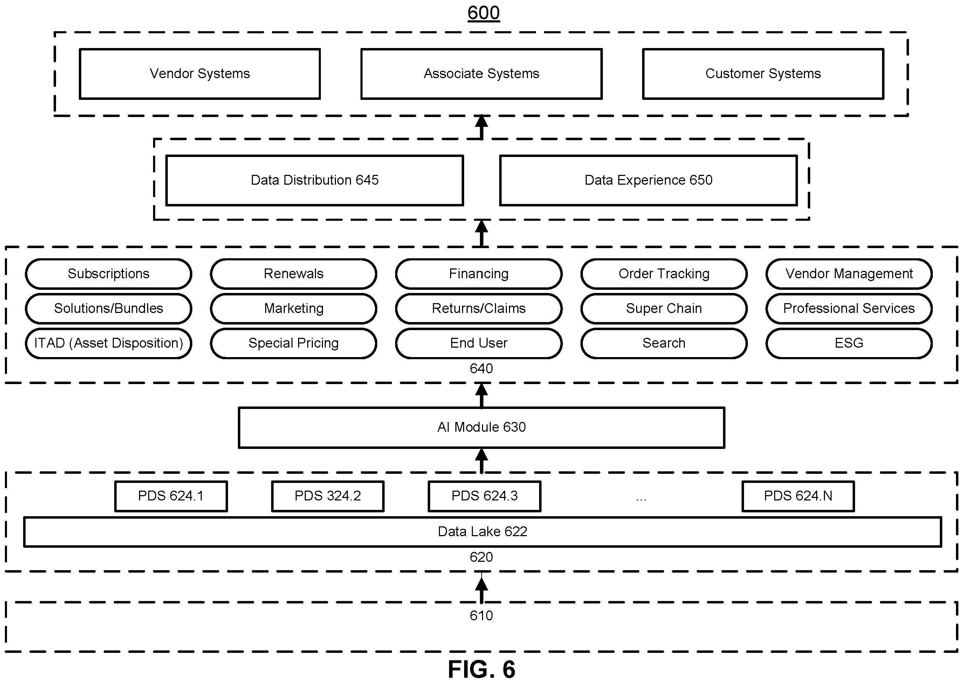

FIG. 6 illustrates RTDM module 600, according to an embodiment. RTDM module 600, which can be an embodiment of RTDM module 310, can include interconnected components, processes, and sub-systems configured to enable real-time data management and analysis.

The RTDM module 600, as depicted in FIG. 5, represents an effective data mesh and change capture component within the overall system architecture. The module can be configured to provide real-time data management and standardization capabilities, enabling efficient operations within the supply chain and distribution management domain.

RTDM module 600 can include an integration layer 610 (also referred to as a "system of records") that integrates with various enterprise systems. These enterprise systems can include ERPs such as SAP, Impulse, META, and I-SCALA, among others, and other data sources. Integration layer 610 can process data exchange and synchronization between RTDM module 600 and these systems. Data feeds can be established to retrieve relevant information from the system of records, such as sales orders, purchase orders, inventory data, and customer information. These feeds enable real-time data updates and ensure that the RTDM module operates with the most current and accurate data.

RTDM module 600 can include data layer 620 configured to process and translate data for retrieval and analysis. Data layer 620 includes data mesh, a cloud-based infrastructure configured to provide scalable and fault-tolerant data storage capabilities. Within the data mesh, multiple Purposive Datastores (PDS) can be deployed to store specific types of data, such as customer data, product data, or inventory data. Each PDS can be optimized for efficient data retrieval based on specific use cases and requirements. The PDSes can be configured to store specific types of data, such as customer data, product data, finance data, and more. These PDS serve as repositories for canonized and/or standardized data, ensuring data consistency and integrity across the system.

In some embodiments, RTDM module 600 implements a data replication mechanism to capture real-time changes from multiple data sources, including transactional systems like ERPs (e.g., SAP, Impulse, META, I-SCALA). The captured data can then be processed and standardized on-the-fly, transforming it into a standardized format suitable for analysis and integration. This process ensures that the data is readily available and current within the data mesh, facilitating real-time insights and decision-making.

More specifically, data layer 620 within the RTDM module 600 can be configured as a powerful and flexible foundation for managing and processing data within the distribution ecosystem. In some embodiments, data layer 620 can encompasses a highly scalable and robust data lake, which can be referred to as data lake 622, along with a set of purposive datastores (PDSes), which can be denoted as PDSes 624.1 to 624.N. These components integrate to ensure efficient data management, standardization, and real-time availability.

Data layer 620 incudes data lake 622, a state-of-the-art storage and processing infrastructure configured to handle the ever-increasing volume, variety, and velocity of data generated within the supply chain. Built upon a scalable distributed file system, such as Apache Hadoop Distributed File System (HDFS) or Amazon S3, the data lake provides a unified and scalable platform for storing both structured and unstructured data. Leveraging the elasticity and fault-tolerance of cloud-based storage, data lake 622 can accommodate the influx of data from diverse sources.

Associated with data lake 622, a population of purposive datastores, PDSes 624.1 to 624.N, can be employed. Each PDS 624 can function as a purpose-built repository optimized for storing and retrieving specific types of data relevant to the supply chain domain. In some non-limiting examples, PDS 624.1 may be dedicated to customer data, storing information such as customer profiles, preferences, and transaction history. PDS 624.2 may be focused on product data, encompassing details about SKU codes, descriptions, pricing, and inventory levels. These purposive datastores allow for efficient data retrieval, analysis, and processing, catering to the diverse needs of supply chain users.

To ensure real-time data synchronization, data layer 620 can be configured to employ one or more change data capture (CDC) mechanisms. These CDC mechanisms can be integrated with the transactional systems, such as legacy ERPs like SAP, Impulse, META, and I-SCALA, as well as other enterprise-wide systems. CDC constantly monitors these systems for any updates, modifications, or new transactions and captures them in real-time. By capturing these changes, data layer 620 ensures that the data within the data lake 622 and PDSes 624 remains current, providing users with real-time insights into the distribution ecosystem.

In some embodiments, data layer 620 can be implemented to facilitate integration with existing enterprise systems using one or more frameworks, such as .NET or Java, ensuring compatibility with a wide range of existing systems and providing flexibility for customization and extensibility. For example, data layer 620 can utilize the Java technology stack, including frameworks like Spring and Hibernate, to facilitate integration with a system of records having a population of diverse ERP systems and other enterprise-wide solutions. This can facilitate smooth data exchange, process automation, and end-to-end visibility across the supply chain.

In terms of data processing and analytics, data layer 620 can use the capabilities of distributed computing frameworks, such as Apache Spark or Apache Flink in some non-limiting examples. These frameworks can enable parallel processing and distributed computing across large-scale datasets stored in the data lake and PDSes. By leveraging these frameworks, supply chain users can perform complex analytical tasks, apply machine learning algorithms, and derive valuable insights from the data. For instance, data layer 620 can use Apache Spark's machine learning libraries to develop predictive models for demand forecasting, optimize inventory levels, and identify potential supply chain risks.

In some embodiments, data layer 620 can incorporate data governance and security measures. Fine-grained access control mechanisms and authentication protocols ensure that only authorized users can access and modify the data within the data lake and PDSes. Data encryption techniques, both at rest and in transit, safeguard the sensitive supply chain information against unauthorized access. Additionally, data layer 620 can implement data lineage and audit trail mechanisms, allowing users to trace the origin and history of data, ensuring data integrity and compliance with regulatory requirements.

In some embodiments, data layer 620 can be deployed in a cloud-native environment, leveraging containerization technologies such as Docker and orchestration frameworks like Kubernetes. This approach ensures scalability, resilience, and efficient resource allocation. For example, data layer 620 can be deployed on cloud infrastructure provided by AWS, Azure, or Google Cloud, utilizing their managed services and scalable storage options. This allows for scaling of resources based on demand, minimizing operational overhead and providing an elastic infrastructure for managing supply chain data.

Data layer 620 of RTDM module 600 can incorporate a highly scalable data lake, data lake 622, along with purpose-built PDSes, PDSes 624.1 to 624.N, and employing CDC mechanisms, data layer 620 ensures efficient data management, standardization, and real-time availability. In a non-limiting example, Data Layer 620 can be implemented utilizing any appropriate technology, such as .NET or Java, and/or distributed computing frameworks like Apache Spark, enables powerful data processing, advanced analytics, and machine learning capabilities. With data governance and security measures, data layer 620 ensures data integrity, confidentiality, and compliance. Through its scalable infrastructure and integration with existing systems, data layer 620 enables supply chain users to make data-driven decisions, optimize operations, and drive business success in the dynamic and complex distribution environment.

RTDM module 600 can include an AI module 630 configured to implement one or more algorithms and machine learning models to analyze the stored data in data layer 620 and derive meaningful insights. In some non-limiting examples, AI module 630 can apply predictive analytics, anomaly detection, and optimization algorithms to identify patterns, trends, and potential risks within the supply chain. AI module 630 can continuously learns from new data inputs and adapts its models to provide accurate and current insights. AI module 630 can generate predictions, recommendations, and alerts and publish such insights to dedicated data feeds.

Data engine layer 640 comprises a set of interconnected systems responsible for data ingestion, processing, transformation, and integration. Data engine layer 640 of RTDM module 600 can include a collection of headless engines 640.1 to 640.N that operate autonomously. These engines represent distinct functionalities within the system and can include, for example, one or more recommendation engines, insights engines, and subscription management engines. Engines 640.1 to 640.N can use the standardized data stored in the data mesh to deliver specific business logic and services. Each engine can be configured to be pluggable, allowing for flexibility and future expansion of the module's capabilities. Exemplary engines are shorn in FIG. 5, which are not intended to be limiting. Any additional headless engine can be included in data engine layer 640 or in other exemplary layers of the disclosed system.

These systems can be configured to receive data from multiple sources, such as transactional systems, IoT devices, and external data providers. The data ingestion process involves extracting data from these sources and transforming it into a standardized format. Data processing algorithms can be applied to cleanse, aggregate, and enrich the data, making it ready for further analysis and integration.

Further, to facilitate integration and access to RTDM module 600, a data distribution mechanism can be employed. Data distribution mechanism 645 can be configured to include one or more APIs to facilitate distribution of data from the data mesh and engines to various endpoints, including user interfaces, micro front ends, and external systems.

Experience layer 650 focuses on delivering an intuitive and user-friendly interface for interacting with supply chain data. Experience layer 650 can include data visualization tools, interactive dashboards, and user-centric functionalities. Through this layer, users can retrieve and analyze real-time data related to various supply chain metrics such as inventory levels, sales performance, and customer demand. The user experience layer supports personalized data feeds, allowing users to customize their views and receive relevant updates based on their roles and responsibilities. Users can subscribe to specific data updates, such as inventory changes, pricing updates, or new SKU notifications, tailored to their preferences and roles.

Thereby, in some embodiments, RTDM module 600 for supply chain and distribution management can include an integration with a system of records and include one or more of a data layer with a data mesh and purposive datastores, an AI component, a data engine layer, and a user experience layer. These components work together to provide users with intuitive access to real-time supply chain data, efficient data processing and analysis, and integration with existing enterprise systems. The technical feeds and retrievals within the module ensure that users can retrieve relevant, current information and insights to make informed decisions and optimize supply chain operations. Accordingly, RTDM module 600 facilitates supply chain and distribution management by providing a scalable, real-time data management solution. Its innovative architecture allows for the rich integration of disparate data sources, efficient data standardization, and advanced analytics capabilities. The module's ability to replicate and standardize data from diverse ERPs, while maintaining auditable and repeatable transactions, provides a distinct advantage in enabling a unified view for vendors, resellers, customers, end customers, and other entities in a distribution system, including an IT distribution system.

### AUTOMATED NOTIFICATION ENGINE

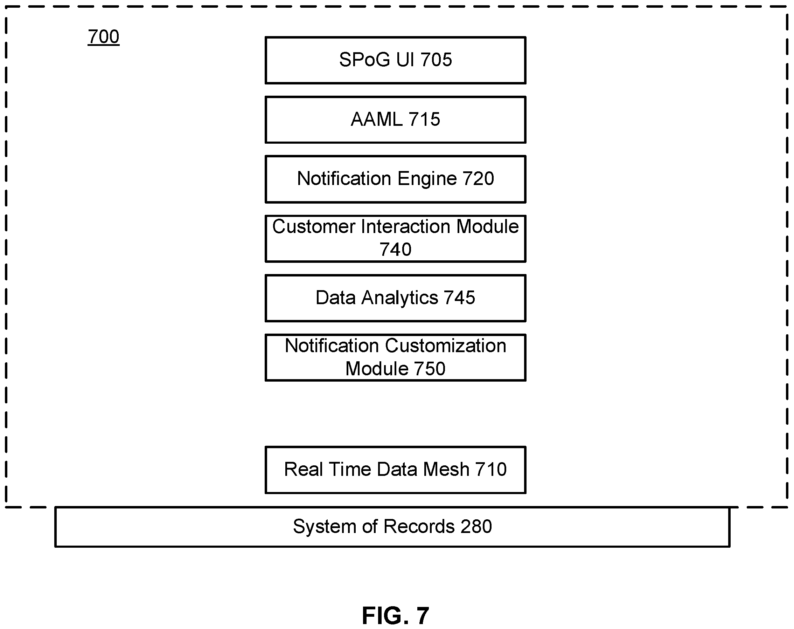

In an embodiment, FIG. 7 illustrates System 700 as an Alerts and Notifications system within a technology distribution platform, comprising Single Pane of Glass User Interface (SPoG UI) 705, Real-Time Data Mesh (RTDM) 710, Advanced Analytics and Machine-Learning (AAML) Module 715, and an integrated Notification Engine 720.

SPoG UI 705 functions as the central command for alert interactions within System 700. It is architected with a user-focused design, offering customizable dashboards for managing alerts and notifications. The interface integrates real-time data visualization tools, enabling users to monitor alert statuses through graphical representations. It can include an intuitive layout that facilitates the workflow of setting notification parameters and provides a comprehensive view of both active and historical alerts. The UI is optimized for responsiveness across various devices and platforms, ensuring accessibility and user engagement.

Within SPoG UI 705, Consumer Interaction Module 706 facilitates direct user engagement with the notification system. This module is optimized for interaction efficiency, featuring a rule-based automation for user responses to notifications. It includes a history tracking sub-module that logs user actions and preferences to refine future alerts. Notification Customization Module 707 enables users to configure notification parameters, supporting custom alert thresholds and delivery modes, ensuring a personalized user experience. The system's data processing capabilities extend via RTDM 710, for example, to integrate with Impulse data, enabling resellers to receive notifications pertinent to their operations. This integration ensures that resellers are kept abreast of relevant information, such as inventory changes or pricing updates, in real time, fostering a responsive and informed reseller network.

RTDM 710 is configured as a comprehensive data management system, for performing alert and notification processes within System 700. It is comprised of an integration layer, a data processing layer, and sub-systems that facilitate real-time data analysis and management. System 700 establishes via RTDM 710 a link with Cloud Marketplaces through an event handling adapter (for example, for Knowledge Article Generator (KAG) integration). This adapter can function as a conduit for event-driven data, capturing marketplace activities and facilitating their transformation into structured events suitable for Notification Engine 720. This connection enables the system to harness cloud-based events, translating marketplace dynamics into actionable notifications.

The integration layer of RTDM 710 interconnects with various enterprise systems, processing data exchange and synchronization to ensure that notifications are generated from the most current and accurate data. It includes data feeds from enterprise systems that provide real-time updates on operational metrics, user activities, and system events. System 700 incorporates data paths originating from the Cloud Management Platform (CMP), where both active data streams, such as user-generated emails, and passive data, like user engagement metrics, are channeled towards the Notification Engine. These data paths are enriched through an intermediary data enrichment node, ensuring that the notification content is both context-rich and tailored to the users' profiles and preferences.

RTDM 710 includes a data layer configured to translate and process data for retrieval and analytics. It encompasses a scalable data mesh and multiple Purposive Datastores (PDS), each optimized for specific data types such as user alerts, system events, or operational metrics. These PDSes store canonized data, ensuring consistency and integrity across the system.

The data layer also can include a data replication mechanism, capturing real-time changes from transactional systems and transforming them into a standardized format for immediate analysis and action. This functionality guarantees that the notification system operates with up-to-date data, enabling real-time insights and decision-making.

RTDM 710's data layer is a formidable foundation for managing the vast data within the distribution ecosystem. It includes a scalable data lake, equipped to handle the large volume and variety of data generated. This data lake acts as a centralized platform for structured and unstructured data, supporting complex analytical tasks and machine learning algorithms to optimize notification relevance and timing. Notification Engine 720 leverages the DataLake, serving as a repository and analytics foundation, to map and merge user data with the notification logic. This integration is configured to enrich notifications with user-specific information and historical data, thus enhancing the personalization and relevance of alerts.

Furthermore, the module incorporates change data capture mechanisms, maintaining real-time data synchronization with various systems. It uses frameworks compatible with a wide array of enterprise systems, ensuring integration and facilitating smooth data exchange.

RTDM 710 also prioritizes data governance and security, implementing fine-grained access control and encryption to protect sensitive information. Containerization technologies within a cloud-native environment ensure that the module is scalable and resilient, capable of adapting to the dynamic needs of the technology distribution platform. RTDM 710 is a dynamic component within System 700, central to the efficient operation of the Notification Engine. It ensures real-time data availability, facilitating the generation of precise and actionable alerts and notifications. This module's advanced data management capabilities are essential for maintaining the integrity and responsiveness of the alerting and notification system within the technology distribution framework.

AAML Module 715 integrates a suite of advanced machine learning algorithms and data processing tools to serve as the analytical core of System 700. It analyzes incoming data streams to detect anomalies, trends, and patterns that trigger notifications. The module is configured with neural networks and decision tree algorithms that adapt and learn from data patterns over time, enhancing predictive accuracy. AAML Module 715 also incorporates natural language processing (NLP) capabilities to analyze unstructured data for sentiment and content that may impact notification relevance. The module's design includes a feedback loop mechanism, where the output of the notification system is used to recalibrate the analytical models continuously, thereby improving the context and timing of alerts.

Notification Engine 720 operates as the central processing unit within System 700 for evaluating events and crafting notifications. It is built with a rules engine that applies a set of criteria to incoming data to ascertain notification triggers. These criteria are based on both static rules and dynamic algorithms that assess event severity, categorization, and user preferences. Notification Engine 720 is also designed with template processing capabilities, enabling the creation of notification content that is consistent and tailored to the context of the alert. It can include an orchestration layer that manages the workflow of notification generation, from event detection through to dispatch, ensuring that each notification is processed accurately and disseminated in real-time. Events are emitted by source systems and processed through an Event Adapter 730, which structures raw event data into a format compatible with the Notification Engine 720. Following processing, notifications are disseminated through various channels managed by a Distribution Module 735, ensuring timely delivery to the intended recipients. Notification Engine 720 is further equipped with diversified channels, specifically designed to dispatch alerts through email and push notifications. These channels are calibrated for high throughput and can adjust the notification delivery mechanisms based on user preference and channel efficacy, thereby optimizing the reach and impact of every alert issued.

The operational flow of System 700 commences with the emission of events by the source systems. Event Adapter 730 is structured to parse and format raw event data, utilizing JSON schemas and XML for interoperability across system boundaries. The adapter is capable of handling high-volume event streams and transforming them into a standardized format for subsequent processing. Following the transformation, the Distribution Module 735 manages the multi-channel dissemination of notifications. This module is designed for scalability and supports various communication protocols such as MQTT and AMQP for event broadcasting. It ensures that notifications are distributed according to user preferences and channel availability, leveraging push technology for instantaneous delivery. Interactions with consumer systems are orchestrated through a subscription model, where entities such as the XAC web message center can subscribe to specific event patterns. This model enables the system to disseminate targeted alerts and allows users to access a historical log of notifications, ensuring continuity and reference for ongoing and past events.

Within SPoG UI 705, a Consumer Interaction Module 740 allows end-users to view and manage notifications, offering a user-centric platform. This aligns with consumer systems, facilitating interaction with the generated alerts. The user experience is further refined by the interactive capabilities of the platform's web interface, which displays notifications and maintains a history of the alerts presented on-screen. Users can interact with this history, providing a feedback loop that informs future notification refinement and user mapping strategies.

The Data Analytics and Storage Component 745, part of RTDM 710, enables storage of vast amounts of event and notification data, supporting analytics, and providing a historical reference to enhance notification accuracy. Data Analytics and Storage Component 745 is configured for maintaining the integrity and accessibility of data.

A Notification Customization Module 750 within SPoG UI 705 provides users the ability to personalize their notifications, facilitating an interactive and tailored alerting experience.

The architecture of System 700 ensures an efficient and dynamic process for managing alerts and notifications, integrating data from multiple sources into a unified interface via SPoG UI 705, automating alert processing via AAML Module 715, and maintaining a real-time, standardized data repository via RTDM 710. This system enhances the overall responsiveness and operational efficiency of the technology distribution platform, ensuring users are current with the most relevant information for overall responsiveness and operational efficiency.

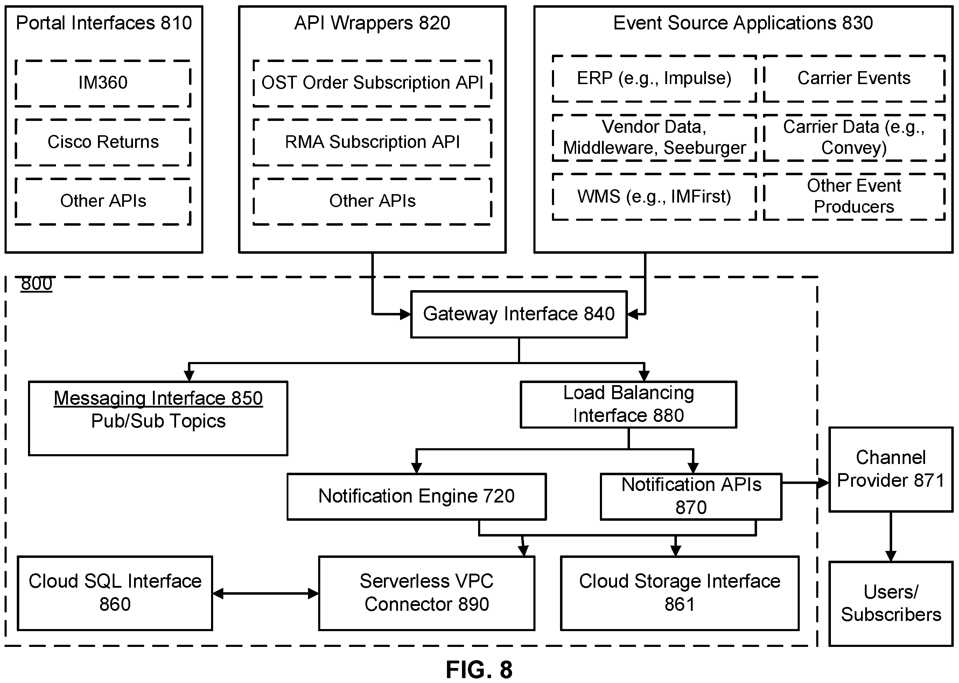

In an embodiment, FIG. 8 illustrates a Notification Architecture 800 for a technology distribution platform, which is constructed to process and manage a multitude of event data from diverse interfaces and to disseminate information effectively to end-users. Notification architecture 800 can incorporate an embodiment of Notification Engine 720 within System 700. As shown in FIG. 8, Notification Architecture 800 depicts a cloud-integrated Alerts and Notifications architecture. In some embodiments, Notification Architecture 800 integrates RTDM 710 from System 700, which provides a data management layer capable of handling high-velocity data streams and enabling real-time analytics for notification processing.

Notification Architecture 800 is configured to evaluate and format event data into notifications, comprising Gateway Interface 840, API Wrappers 820, Event Source Applications 830, Messaging Interface 850, Cloud SQL Interface 860, Cloud Storage Interface 861, Notification APIs 870, Serverless VPC Connector 890, and Channel Provider 871. RTDM 710 within Notification Architecture 800 may also include advanced data processing sub-systems that facilitate the operationalization of analytics, allowing for the transformation of raw data into actionable insights for notification customization.

Gateway Interface 840 is denoted as an API Gateway, which serves as the controlled access point for incoming data. It ensures secure data transfer by enforcing requisite protocols and directing the flow of data to the correct subsystems within the Notification Engine.

Portal Interfaces 810 are entry points for user interactions, with Portal Interface 810 dedicated to general user interactions, Portal Interface 811 designed for logistics and returns management, and Portal Interface 812 allocated for client services management. These interfaces facilitate user engagement with the system, providing customized dashboard experiences for monitoring and managing notifications.

API Wrappers 820 function as Domain-Specific Wrapper APIs, offering modular and domain-tailored conduits for event subscription and translation, converting business events into standardized notification requests for processing by the Notification Engine.

Event Source Applications 830, referred to as Source Application Interface 830, include various enterprise systems like ERP and WMS that emit operational events to be captured and processed by Notification Engine 800 for notification triggers. In some embodiments, RTDM 710 is employed to establish an integrated link, filtering and standardization between Event Source Applications 830 and Notification Architecture 800, facilitating data flow and ensuring that notifications are generated based on the current, real-time, operational events.

Messaging Interface 850, indicated as Pub/Sub Topics, manages the event messages via a publish/subscribe mechanism. This interface is critical for the asynchronicity of message queuing, which allows the system to handle varying loads and maintain a consistent flow of notifications. In some embodiments, Messaging Interface 850 be operably connected and/or integrated with RTDM 710 to prioritize and route messages, optimizing the delivery of notifications based on real-time data analysis and user engagement metrics.

Notification Engine 720 comprises sub-modules including Notification Engine 720 itself and Notification API 870, which are responsible for the evaluation of events and formulation of notifications. These sub-modules apply criteria to incoming data to determine notification triggers and manage the workflow from event detection to notification dispatch. Notification Engine 720 can incorporate or operably connect to AAML Module 715, configured to apply machine learning algorithms for pattern detection and predictive analytics, thereby refining the criteria used for notification triggers within Notification APIs 870.

In some embodiments, Notification APIs 870, interconnected with Notification Engine 720, apply predetermined criteria to incoming data to trigger appropriate notifications. Channel Provider 871 manages the dispatch of notifications through email services, ensuring reliable delivery to Users/Subscribers. In some embodiments, the SPoG UI 705 provides an integrated platform that enables users to interact with, manage, and personalize their notification experiences, thereby optimizing the interface for various user segments. SPoG UI 705 can include user-centered design, enabling real-time monitoring and management of alerts and notifications through customizable dashboards. In some embodiments, AAML Module 715 is configured to enhance functionality of Notification APIs 870 by incorporating user behavior models that adapt over time, providing a feedback loop mechanism for the continuous improvement of the notification system.

Load Balancing Interface 880 is designed with dynamic distribution algorithms to equitably manage incoming requests, ensuring system reliability and avoiding bottlenecks. Serverless VPC Connector 890 establishes secure connections to cloud services, incorporating security measures such as automated patch management and network intrusion detection, thus enhancing the system's data security framework. In some embodiments, Load Balancing Interface 880 can be incorporated into, or otherwise configured to utilize, RTDM 710's real-time processing capabilities to dynamically adjust the distribution of network traffic, thereby maintaining system performance even under varying loads.

A Cloud Service Interface can include Cloud SQL Interface 860 and Cloud Storage Interface 861, each performing specific roles in data management. Cloud SQL Interface 860 handles structured data, providing managed database services, while Cloud Storage Interface 861 is configured for the storage of unstructured data, supporting analytics and historical data retrieval. In certain embodiments, Cloud SQL Interface 860 and Cloud Storage Interface 861 can be integrated with RTDM 710 to support structured and unstructured data flows, such that RTDM 710 is configured to provide real-time data warehousing to complement data management and retrieval functions of the cloud services.

Channel Provider 871, operably connected to Notification API 870, dispatches notifications through email services. This provider ensures the reliable delivery of notifications to Users/Subscribers, e.g., end-users who interact with the distribution platform and receive notifications and managing their preferences through the interfaces provided by the Notification Engine.

Load Balancing Interface 880 distributes incoming requests to prevent bottlenecks and to ensure system reliability. This interface employs algorithms that dynamically allocate system resources to maintain performance.

Serverless VPC Connector 890 establishes secure connections to cloud services, facilitating direct communication within the cloud provider's network, enhancing data security through measures such as encryption and intrusion detection.

Thereby, Notification Engine 720 incorporated into Notification Architecture 800 provides resilient and extensible notification to comply with evolving complexities and demands of technology distribution platforms. Notification Architecture 800 enables users and systems to be consistently engaged with the current, real-time information, improving the platform's overall responsiveness and operational efficiency.

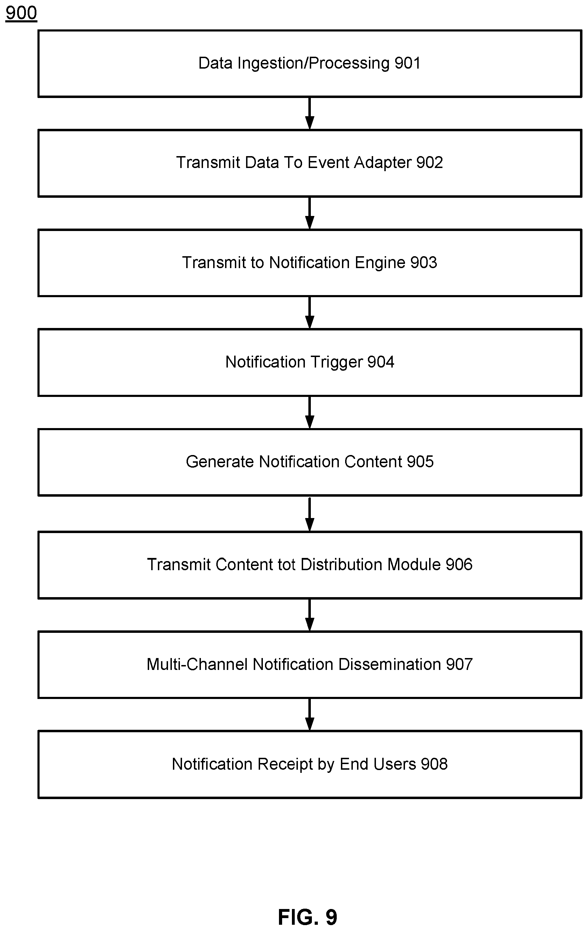

FIG. 9 illustrates a flow diagram of method 900 for managing data flow from event generation to notification dispatch within System 700. This flowchart outlines the sequential processing steps through which data transitions from raw events to refined notifications, highlighting the operational synergy between RTDM 710, Event Adapter 730, and Distribution Module 735. The method elucidates the transformation of diverse data inputs into structured, actionable alerts that are tailored to the users' specifications and distributed across multiple channels.

At Operation 901, the method commences with the collection of raw data from a multitude of event source applications. These sources may include, but are not limited to, ERP systems, WMS platforms, and direct user activities, which emit operational data pivotal to the alert generation process. Operation 901 can include ingesting the data by RTDM 710, where filtering and validation check can occur. Operation 901 can be performed to ensure that accurate data is processed and filtered based on relevance, maintaining the integrity of the notification system. Operation 901 can also include performing data enrichment by RTDM 710, where contextual information can be appended and/or associated to the data, augmenting it with additional details necessary for creating a comprehensive notification. This enriched data may include user preferences, historical interaction data, and related metadata. Operation 904 can further include standardization of the ingested data through RTDM 710. Data from the disparate sources can be transformed into a uniform format, which is essential for the subsequent processing steps and ensures consistency across the notification system.

At Operation 902, the standardized data is replicated to the Data Lake within RTDM 710, ensuring that a persistent, historical record of events and notifications is maintained for analytics and auditing purposes.

At Operation 903, the method advances with the transmission of standardized data to Event Adapter 730. Here, the data is structured into a compatible format for the Notification Engine, often utilizing JSON schemas or XML formats for interoperability and integration.

At Operation 904, Event Adapter 730 delivers the formatted data to the Notification Engine, where predefined rules and dynamic algorithms are applied at Operation 908 to ascertain the necessity of a notification trigger.

At Operation 905, upon determination of a trigger event, the Notification Engine crafts the notification content, leveraging template processing capabilities to generate alerts that are consistent and contextually tailored to the event and user profiles.

At Operation 906, the Notification Engine then passes the generated notifications to the Distribution Module 735, which is tasked with the dissemination of alerts across various channels.

At Operation 907, Distribution Module 735 employs a multi-channel approach, ensuring notifications are delivered through the most appropriate and effective mediums, such as email, SMS, or application-based push notifications, according to user preferences and channel availability.

At Operation 908 notifications are received by end-users, who can interact with and respond to the alerts through the SPoG UI, thereby closing the loop on the notification dispatch process and facilitating a continuous feedback mechanism for System 700.

Thereby, method 900 provides an efficient process flow for notification dispatch, from the point of data capture to the final user interaction, reinforcing the user-centric design of System 700.

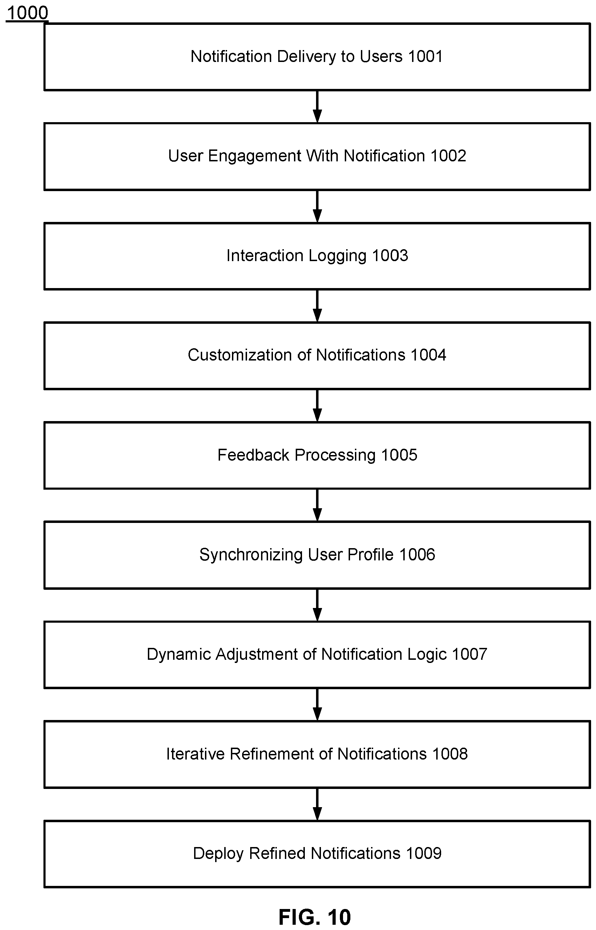

FIG. 10 illustrates a flow diagram of method 1000 for user interaction with notifications within System 700. This flowchart details the user engagement sequence, showcasing how users receive, acknowledge, and interact with notifications through the Single Pane of Glass User Interface (SPoG UI). The method demonstrates the responsiveness of System 700 to user input, which ranges from basic notification acknowledgment to intricate user-driven configuration adjustments.

At Operation 1001, method 1000 initiates with the delivery of notifications to users through the SPoG UI 705. These notifications are the result of the processes detailed in FIG. 9, now presented to the user in a coherent and user-friendly manner on their respective device interfaces.

At Operation 1002, upon receiving a notification, the user engages with the alert through SPoG UI 705. This engagement could be an acknowledgment of receipt, a request for additional details, or an immediate response action, depending on the notification's nature and urgency.

At Operation 1003, user interactions are logged by the Consumer Interaction Module 706 within SPoG UI 705. This module captures and records the user's actions and preferences, contributing to a comprehensive history of user-notification interactions.

At Operation 1004, the Notification Customization Module 707 within SPoG UI 705 enables users to adjust notification parameters. Users can set preferences for notification frequency, channel, and format, tailoring the alerting experience to their individual needs.

At Operation 1005, method 1000 includes the processing of user feedback received through SPoG UI 705. This feedback could pertain to the notification's relevance, timeliness, or content quality, and is used to refine future notifications.

At Operation 1006, the user's preferences and feedback are synchronized with the user's profile in the backend systems, ensuring that all future notifications are aligned with the updated user settings and preferences. Operation 1006 can include analyzing, utilizing RTDM 710 in conjunction with AAML Module 715, aggregated user interaction data to identify trends and patterns in user behavior and notification interaction.

At Operation 1007, based on the analysis performed by RTDM 710 and AAML Module 715, System 700 can dynamically adjust the notification logic within the Notification Engine 720. This adjustment could involve altering notification rules, updating templates, or modifying delivery channels.

At Operation 1008, method 1000 progresses to the iterative refinement of notification content and delivery mechanisms. The continuous loop of user interaction data informs the evolution of the notification system, leading to increasingly personalized and relevant user experiences.

At Operation 1009, the refined notifications are then redeployed through the Distribution Module 735, closing the feedback loop by delivering the enhanced notifications back to the user via their preferred channels.

Thereby, System 700 provides a user-centric notification process in Method 1000, where each user interaction is captured, analyzed, and used to inform the system's behavior. Method 700 emphasizes the adaptability of the notification system to user preferences and behavior, providing a personalized and engaging user experience within the technology distribution platform.

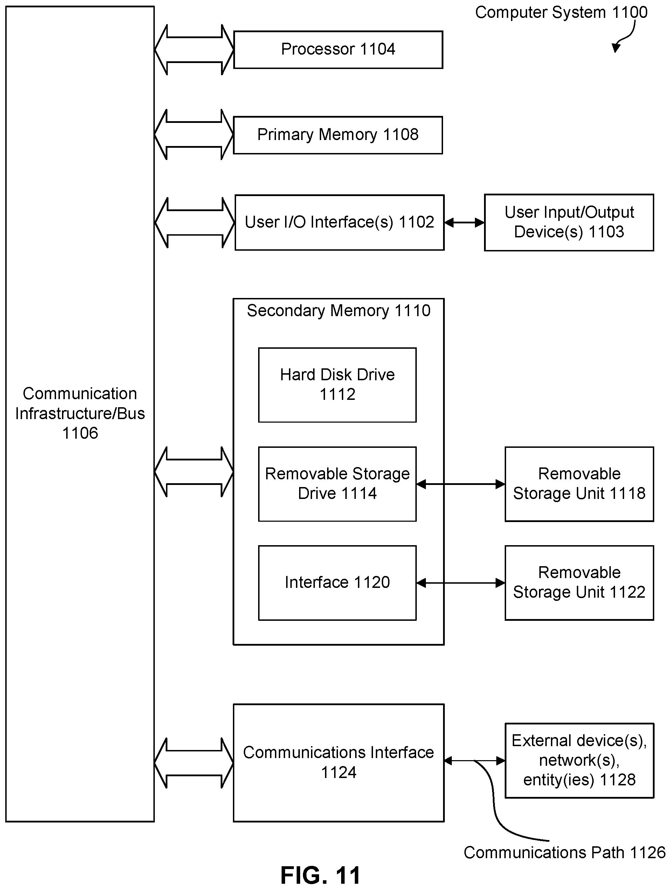

FIG. 11 depicts a block diagram of example components of device 1100. One or more computer systems 1100 may be used, for example, to implement any of the embodiments discussed herein, as well as combinations and sub-combinations thereof. Computer system 1100 may include one or more processors (also called central processing units, or CPUs), such as a processor 1104. Processor 1104 may be connected to a communication infrastructure or bus 1106.

Computer system 1100 may also include user input/output device(s) 1103, such as monitors, keyboards, pointing devices, etc., which may communicate with communication infrastructure 1106 through user input/output interface(s) 1102.

One or more processors 1104 may be a graphics processing unit (GPU). In an embodiment, a GPU may be a processor that can be a specialized electronic circuit configured to process mathematically intensive applications. The GPU may have a parallel structure that can be efficient for parallel processing of large blocks of data, such as mathematically intensive data common to computer graphics applications, images, videos, etc.

Computer system 1100 may also include a main or primary memory 1108, such as random access memory (RAM). Main memory 1108 may include one or more levels of cache. Main memory 1108 may have stored therein control logic (i.e., computer software) and/or data.

Computer system 1100 may also include one or more secondary storage devices or memory 1110. Secondary memory 1110 may include, for example, a hard disk drive 1112 and/or a removable storage device or drive 1114.

Removable storage drive 1114 may interact with a removable storage unit 1118. Removable storage unit 1118 may include a computer-usable or readable storage device having stored thereon computer software (control logic) and/or data. Removable storage unit 1118 may be program cartridge and cartridge interface (such as that found in video game devices), a removable memory chip (such as an EPROM or PROM) and associated socket, a memory stick and USB port, a memory card and associated memory card slot, and/or any other removable storage unit and associated interface. Removable storage drive 1114 may read from and/or write to removable storage unit 1118.

Secondary memory 1110 may include other means, devices, components, instrumentalities or other approaches for allowing computer programs and/or other instructions and/or data to be accessed by computer system 1100. Such means, devices, components, instrumentalities or other approaches may include, for example, a removable storage unit 1122 and an interface 1120. Examples of the removable storage unit 1122 and the interface 1120 may include a program cartridge and cartridge interface (such as that found in video game devices), a removable memory chip (such as an EPROM or PROM) and associated socket, a memory stick and USB port, a memory card and associated memory card slot, and/or any other removable storage unit and associated interface.

Computer system 1100 may further include a communication or network interface 1124. Communication interface 1124 may enable computer system 1100 to communicate and interact with any combination of external devices, external networks, external entities, etc. (individually and collectively referenced by reference number 1128). For example, communication interface 1124 may allow computer system 1100 to communicate with external or remote devices 1128 over communications path 1126, which may be wired and/or wireless (or a combination thereof), and which may include any combination of LANs, WANs, the Internet, etc. Control logic and/or data may be transmitted to and from computer system 1100 via communication path 1126.

Computer system 1100 may also be any of a personal digital assistant (PDA), desktop workstation, laptop or notebook computer, netbook, tablet, smartphone, smartwatch or other wearables, appliance, part of the Internet-of-Things, and/or embedded system, to name a few non-limiting examples, or any combination thereof.

Computer system 1100 may be a client or server, accessing or hosting any applications and/or data through any delivery paradigm, including but not limited to remote or distributed cloud computing solutions; local or on-premises software ("on-premise" cloud-based solutions); "as a service" models (e.g., content as a service (CaaS), digital content as a service (DCaaS), software as a service (SaaS), managed software as a service (MSaaS), platform as a service (PaaS), desktop as a service (DaaS), framework as a service (FaaS), backend as a service (BaaS), mobile backend as a service (MBaaS), infrastructure as a service (IaaS), etc.); and/or a hybrid model including any combination of the foregoing examples or other services or delivery paradigms.

Any applicable data structures, file formats, and schemas in computer system 1100 may be derived from standards including but not limited to JavaScript Object Notation (JSON), Extensible Markup Language (XML), Yet Another Markup Language (YAML), Extensible Hypertext Markup Language (XHTML), Wireless Markup Language (WML), MessagePack, XML User Interface Language (XUL), or any other functionally similar representations alone or in combination. Alternatively, proprietary data structures, formats or schemas may be used, either exclusively or in combination with known or open standards.

In some embodiments, a tangible, non-transitory apparatus or article of manufacture comprising a tangible, non-transitory computer useable or readable medium having control logic (software) stored thereon may also be referred to herein as a computer program product or program storage device. This includes, but is not limited to, computer system 1100, main memory 1108, secondary memory 1110, and removable storage units 1118 and 1122, as well as tangible articles of manufacture embodying any combination of the foregoing. Such control logic, when executed by one or more data processing devices (such as computer system 1100), may cause such data processing devices to operate as described herein.

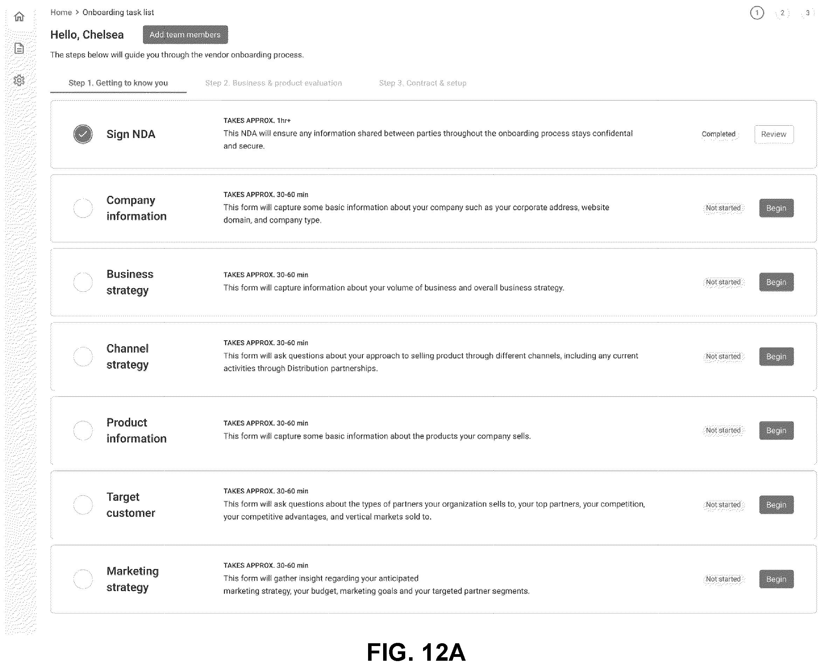

FIGS. 12A to 12Q depict various screens and functionalities of the SPoG UI related to vendor onboarding, partner dashboard, customer carts, order summary, SKU generation, order tracking, shipment tracking, subscription history, and subscription modifications. A detailed description of each figure is provided below:

FIG. 12A depicts a Vendor Onboarding Initiation screen that represents the initial step of the vendor onboarding process. It provides a form or interface where vendors can express their interest in joining the distribution ecosystem. Vendors can enter their basic information, such as company details, contact information, and product catalogs.

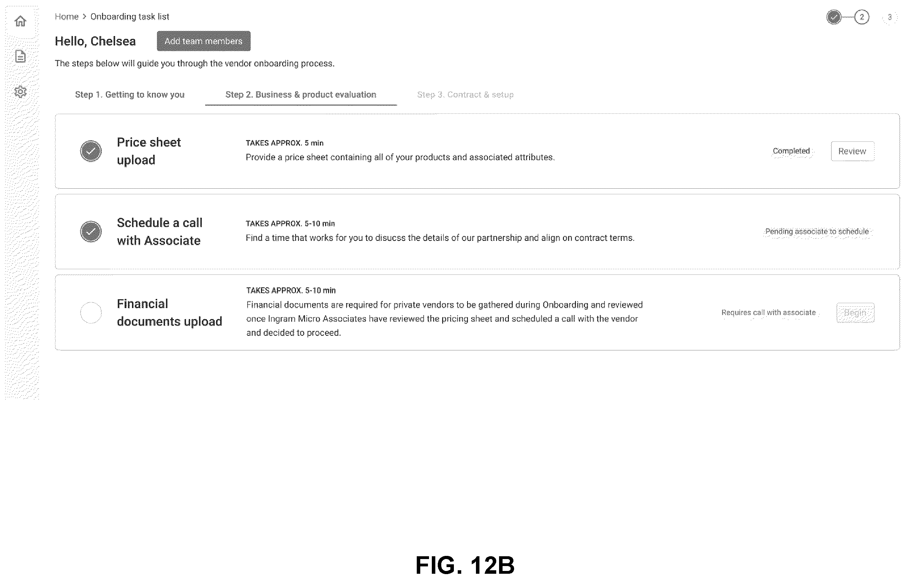

FIG. 12B depicts a Vendor Onboarding Guide that displays a step-by-step guide or checklist for vendors to follow during the onboarding process. It outlines the necessary tasks and requirements, ensuring that vendors have a clear understanding of the onboarding process and can progress smoothly.

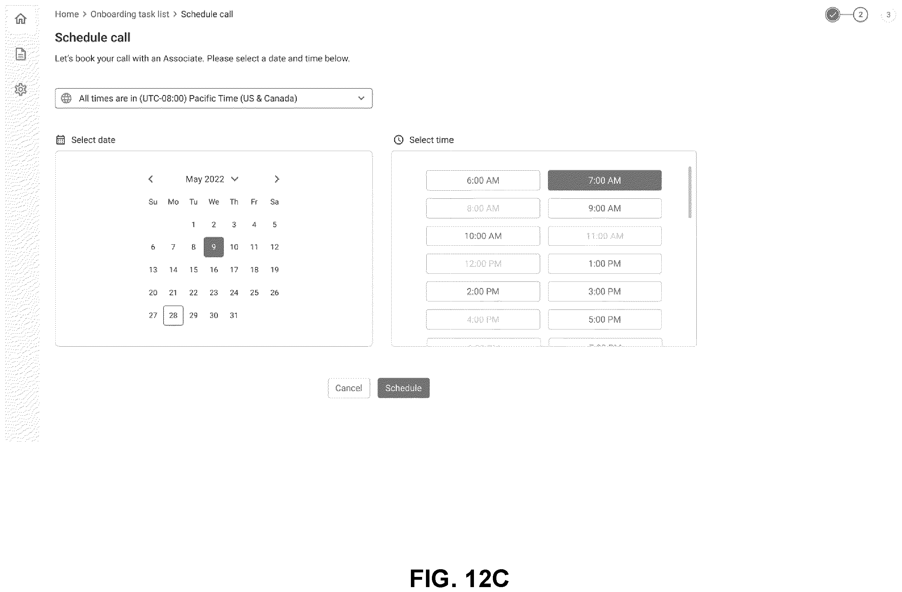

FIG. 12C depicts a Vendor Onboarding Call Scheduler that facilitates scheduling calls or meetings between vendors and platform associates or representatives responsible for guiding them through the onboarding process. Vendors can select suitable time slots or request a call, ensuring effective communication and assistance throughout the onboarding journey.

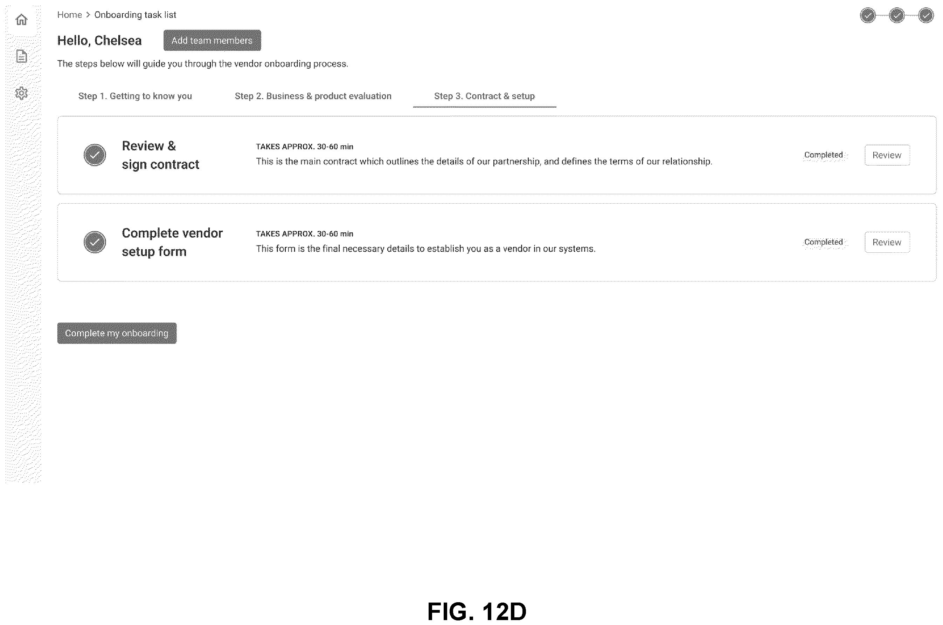

FIG. 12D depicts a Vendor Onboarding Task List that presents a comprehensive task list or dashboard that outlines the specific steps and actions required for successful vendor onboarding. It provides an overview of pending tasks, completed tasks, and upcoming deadlines, helping vendors track their progress and ensure timely completion of each onboarding task.

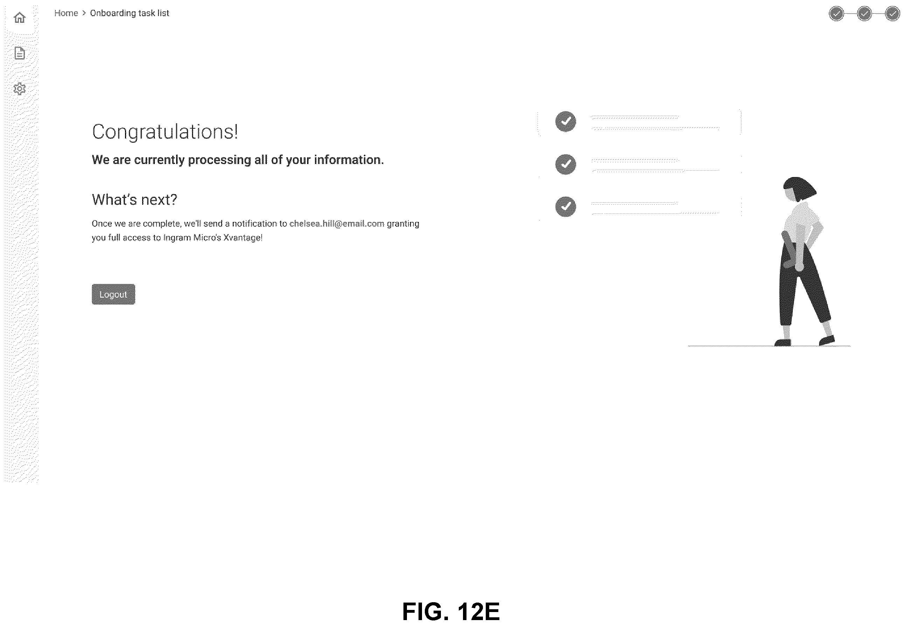

FIG. 12E depicts a Vendor Onboarding Completion Screen that confirms the successful completion of the vendor onboarding process. It may display a congratulatory message or summary of the completed tasks, indicating that the vendor is now officially onboarded into the distribution ecosystem.

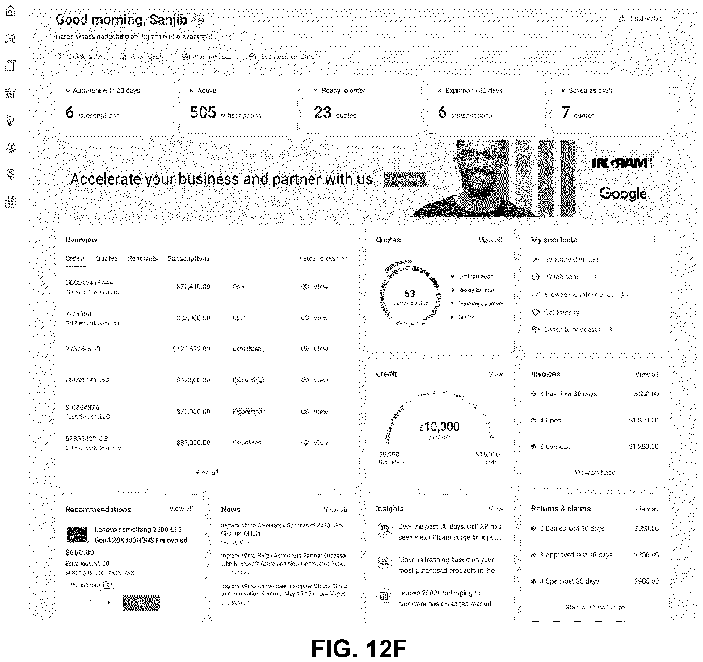

FIG. 12F depicts a Partner Dashboard that offers partners or users a centralized view of relevant information and metrics related to their partnership with the distribution ecosystem. It provides an overview of performance indicators, key data points, and actionable insights to facilitate effective collaboration and decision-making.

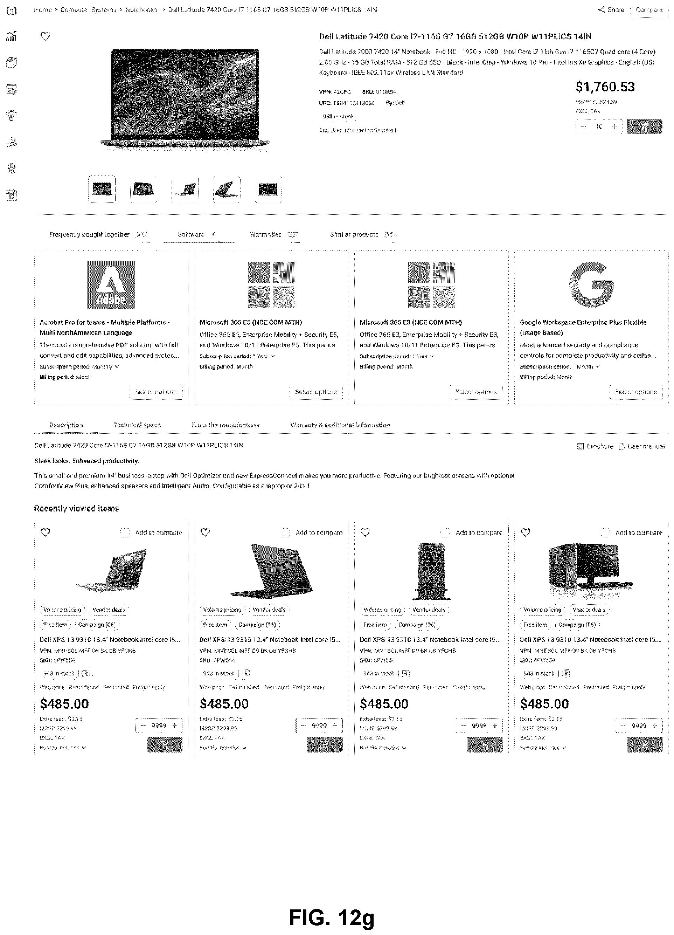

FIG. 12G depicts a Customer Product Cart that represents the customer's product cart, where they can add items they wish to purchase. It displays a list of selected products, quantities, prices, and other relevant details. Customers can review and modify their cart contents before proceeding to the checkout process.

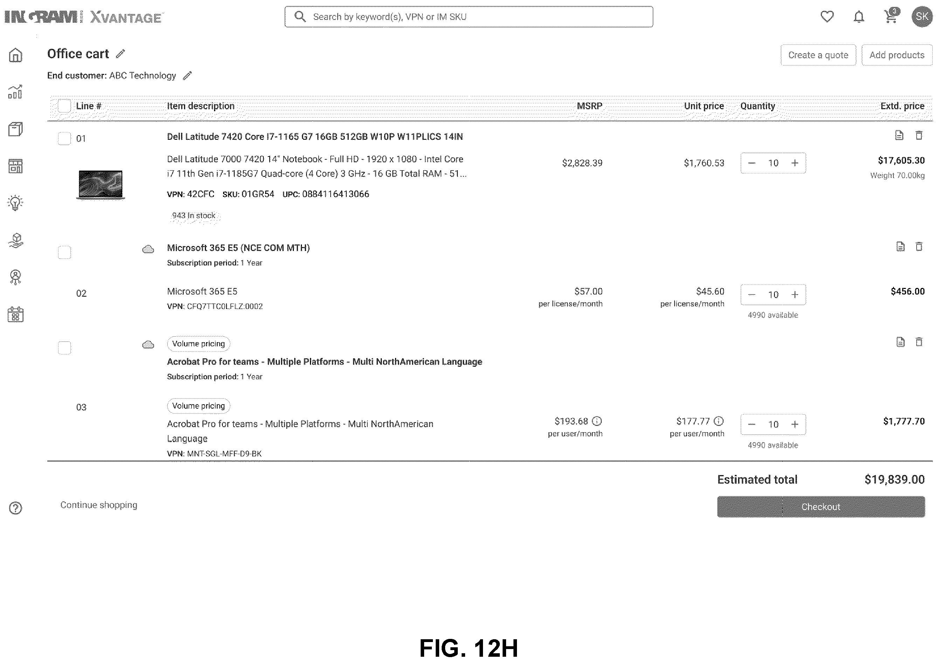

FIG. 12H depicts a Customer Subscription Cart that allows customers to manage their subscription-based purchases. It displays the selected subscription plans, pricing, and duration. Customers can review and modify their subscription details before finalizing their choices.

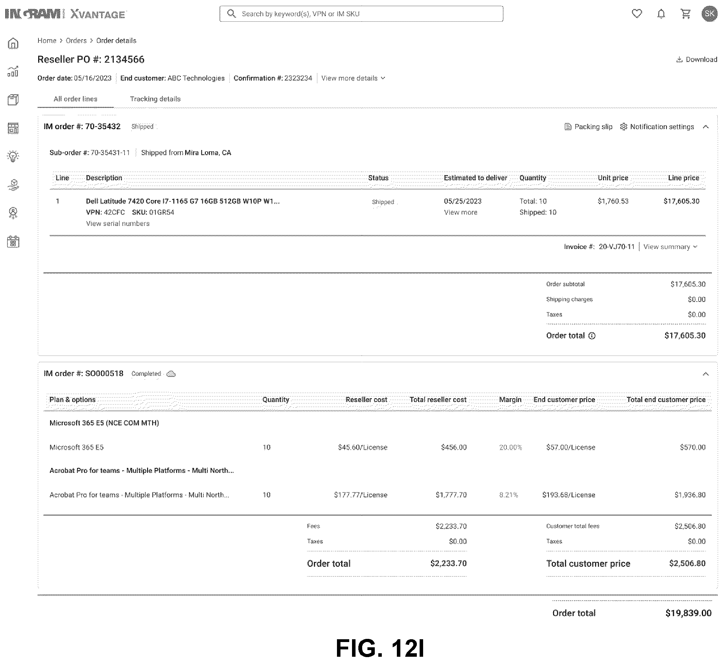

FIG. 12I depicts a Customer Order Summary that provides a summary of the customer's order, including details such as the products or subscriptions purchased, quantities, pricing, and any applied discounts or promotions. It allows customers to review their order before confirming the purchase.

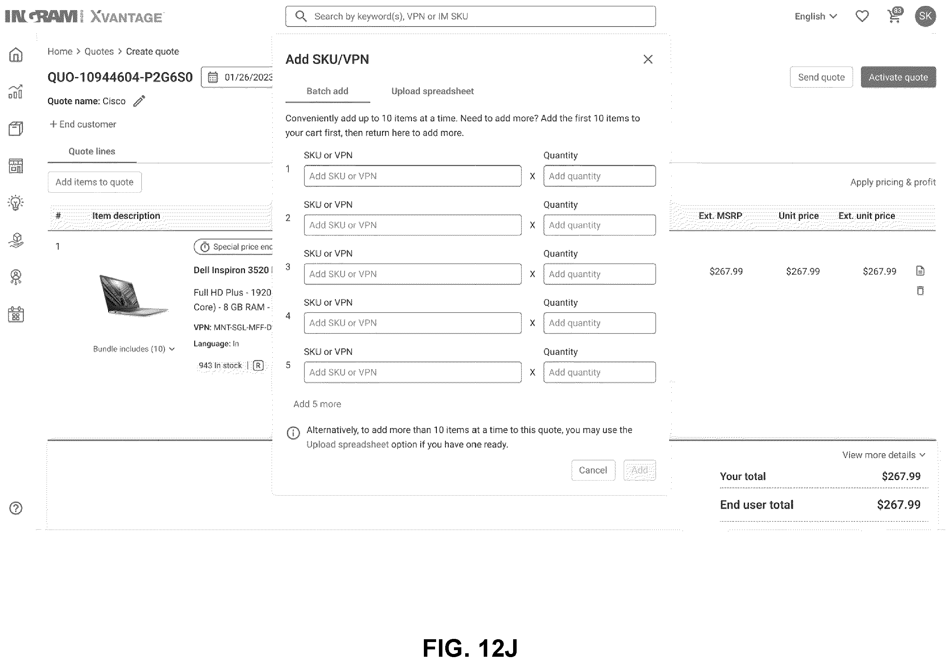

FIG. 12J depicts a Vendor SKU Generation screen for generating unique Stock Keeping Unit (SKU) codes for vendor products. It may include fields or options where vendors can specify the product details, attributes, and pricing, and the system automatically generates the corresponding SKU code.

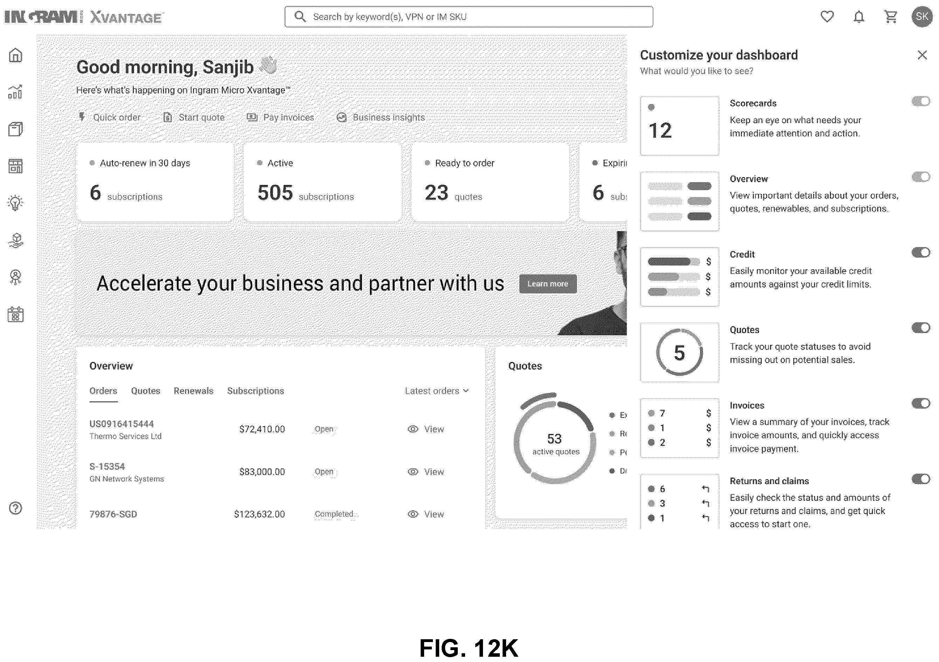

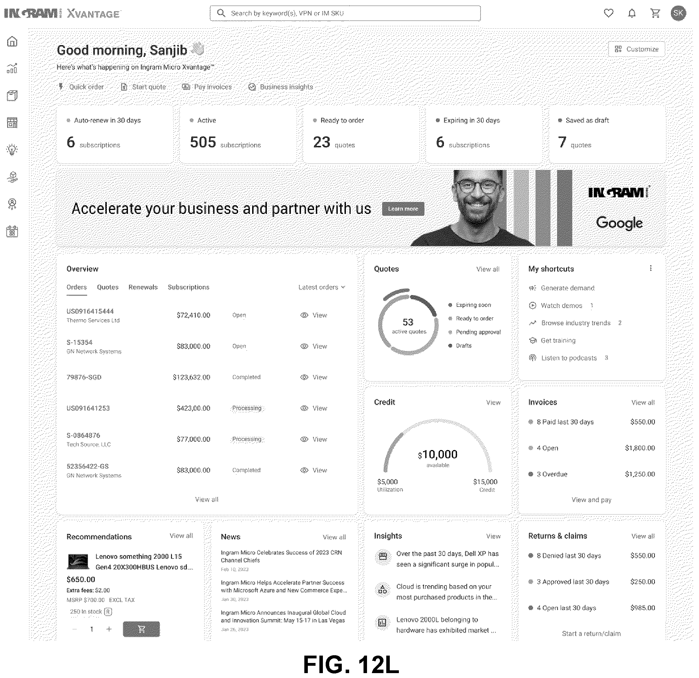

FIGS. 12K and 12L depicts Dashboard Order Summary to display summarized information about orders placed within the distribution ecosystem. They present key order details, such as order number, customer name, product or subscription information, quantity, and order status. The dashboard provides an overview of order activity, enabling users to track and manage orders efficiently.

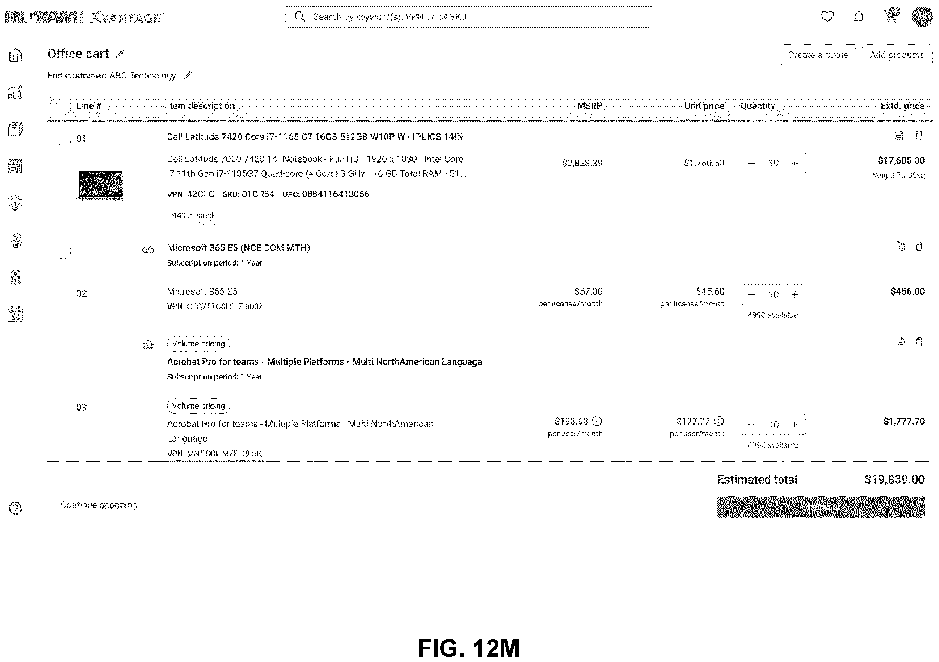

FIG. 12M depicts a Customer Subscription Cart that permits a customer to add, modify, or remove subscription plans. It can display a list of selected subscriptions, pricing, and renewal dates. Customers can manage their subscriptions and make changes according to their preferences and requirements.

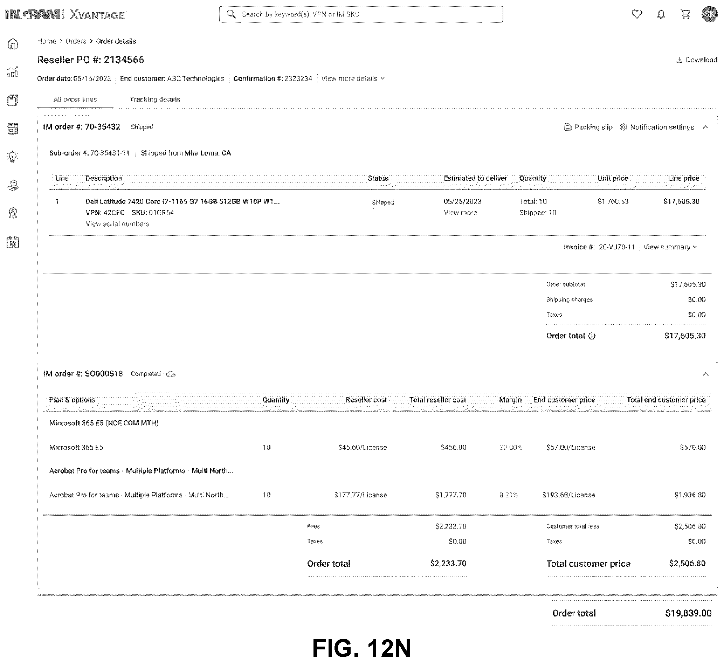

FIG. 12N depicts a Customer Order Tracking screen that enables customers to track the status and progress of their orders within the supply chain. It displays real-time updates on order fulfillment, including processing, packaging, and shipping. Customers can monitor the movement of their orders and anticipate delivery times.

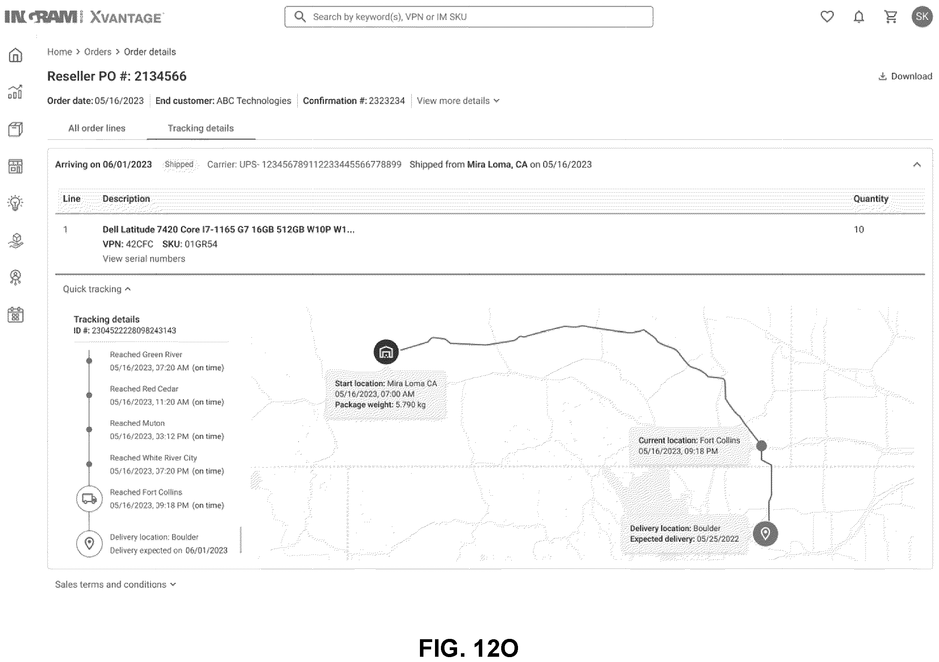

FIG. 12O depicts a Customer Shipment Tracking that provides customers with real-time tracking information about their shipments. It may include details such as the carrier, tracking number, current location, and estimated delivery date. Customers can stay informed about the whereabouts of their shipments.

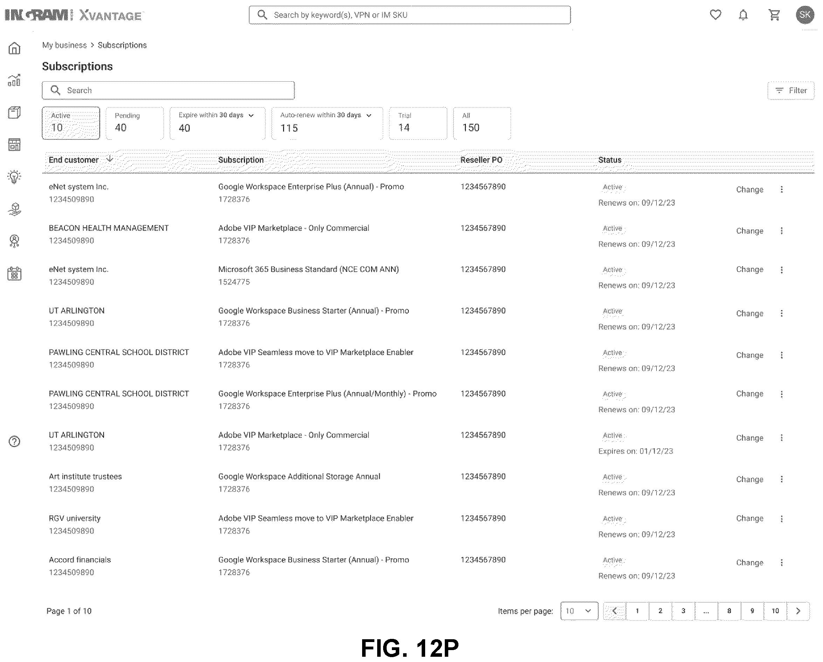

FIG. 12P depicts a Customer Subscription History, that presents a historical record of the customer's subscription activities. It displays a list of previous subscriptions, including the subscription plan, duration, and status. Customers can review their subscription history, track past payments, and refer to previous subscription details.

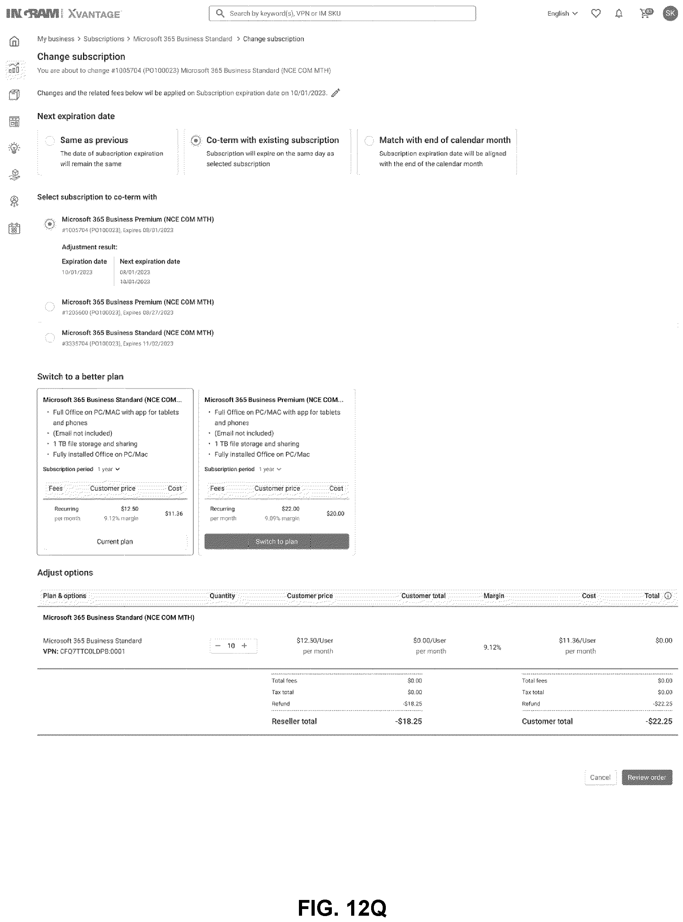

FIG. 12Q depicts a Customer Subscription Modifications dialog, that allows customers to modify their existing subscriptions. It offers options to upgrade or downgrade subscription plans, change billing details, or adjust other subscription-related preferences. Customers can manage their subscriptions according to their evolving needs or preferences.

The depicted UI screens are not limiting. In some embodiments the UI screens of FIGS. 12A to 12Q collectively represent the diverse functionalities and features offered by the SPoG UI, providing users with a comprehensive and user-friendly interface for vendor onboarding, partnership management, customer interaction, order management, subscription management, and tracking within the distribution ecosystem.

It is to be appreciated that the Detailed Description section, and not the Summary and Abstract sections, is intended to be used to interpret the claims. The Summary and Abstract sections may set forth one or more but not all exemplary embodiments of the present invention as contemplated by the inventor(s), and thus, are not intended to limit the present invention and the appended claims in any way.

The present invention has been described above with the aid of functional building blocks illustrating the implementation of specified functions and relationships thereof. The boundaries of these functional building blocks have been arbitrarily defined herein for the convenience of the description. Alternate boundaries can be defined so long as the specified functions and relationships thereof are appropriately performed.

The foregoing description of the specific embodiments will so fully reveal the general nature of the invention that others can, by applying knowledge within the skill of the art, readily modify and/or adapt for various applications such specific embodiments, without undue experimentation, without departing from the general concept of the present invention. Therefore, such adaptations and modifications are intended to be within the meaning and range of equivalents of the disclosed embodiments, based on the teaching and guidance presented herein. It is to be understood that the phraseology or terminology herein is for the purpose of description and not of limitation, such that the terminology or phraseology of the present specification is to be interpreted by the skilled artisan in light of the teachings and guidance.

The breadth and scope of the present invention should not be limited by any of the above-described exemplary embodiments, but should be defined only in accordance with the following claims and their equivalents.

## Claims

1. A system for managing alerts and notifications within a technology distribution platform, comprising:
means for collecting event data from multiple source systems and presenting notifications to users via a Single Pane of Glass User Interface (SPoG UI);
a Real-Time Data Mesh (RTDM) configured for initial filtering, data enrichment, and standardization of the event data into a uniform format;
persistent storage means for replicating standardized data for analytics and auditing purposes;
an Event Adapter configured to format data for processing by a Notification Engine;
a Notification Engine designed to determine notification triggers and generate alert content based on rules and algorithms;
a logging and user interaction module for capturing and recording user interactions with notifications and enabling notification setting customization;
an Advanced Analytics and Machine Learning (AAML) Module for processing user feedback and dynamically adapting notification logic;
a Distribution Module for iteratively refining notification content and delivery mechanisms and redeploying enhanced notifications across multiple channels.

2. The system of claim 1, wherein the SPoG UI includes real-time visualization tools for monitoring alert statuses and managing notification preferences.

3. The system of claim 1, wherein the RTDM is configured to maintain real-time synchronization with source systems to ensure data accuracy and timeliness.

4. The system of claim 1, wherein the Notification Engine is configured to orchestrate a workflow of notification generation from event detection to dispatch.

5. The system of claim 1, wherein the Distribution Module supports a plurality of communication protocols, the plurality of communication protocols including one or more of MQTT and AMQP for broadcasting notifications, and wherein the system supports interoperability utilizing JSON schemas and XML formats for data compatibility.

6. The system of claim 1, wherein the user interaction module allows users to customize alert thresholds, notification frequency, and channel preferences.

7. The system of claim 1, further including analytics and reporting means for generating real-time reports on notification engagement metrics and user response rates.

8. A system for managing alerts and notifications within a technology distribution platform, comprising:
a Notification Engine configured to process event data from diverse user portals and source application interfaces, wherein the Notification Engine comprises:
an API Gateway facilitating secure data ingress and routing to messaging interfaces;
a Cloud Service Interface integrating cloud-based services for data management and analytics;
a Load Balancing Interface designed to manage and distribute incoming requests across the platform;
a Serverless VPC Connector to establish secure connections to cloud services; and
a Distribution Module to disseminate notifications via various communication channels; and
a Single Pane of Glass User Interface (SPoG UI) configured to enable users to interact with, manage, and personalize their notification experiences.

9. The system of claim 8, wherein the Portal Interfaces are optimized to provide tailored dashboard experiences for various user segments.

10. The system of claim 8, wherein the API Wrappers are modular and configurable to support different business domain requirements within the platform.

11. The system of claim 8, wherein the Cloud Service Interface includes a scalable data lake for structured and unstructured data management.

12. The system of claim 8, wherein the Channel Provider includes specialized channels for email, SMS, and application-based push notifications.

13. The system of claim 8, wherein the Load Balancing Interface employs dynamic distribution algorithms to manage incoming API calls and system load.

14. The system of claim 8, wherein the Serverless VPC Connector is configured with security measures including automated patch management and network intrusion detection.

15. The system of claim 8, wherein the Notification Engine comprises a feedback loop mechanism for continuous improvement based on user interaction data.

16. A computerized method for managing alerts and notifications within a technology distribution platform, the method comprising:
collecting event data from multiple source systems and presenting notifications to users via a Single Pane of Glass User Interface (SPoG UI);
processing the event data through a Real-Time Data Mesh (RTDM) by applying one or more of an initial filtering, data enrichment, and data standardization, into a uniform format for notification processing;
replicating the standardized data to persistent storage for future analytics and auditing purposes;
processing the data by an Event Adapter to generate formatted data;
inputting the formatted data to a Notification Engine, wherein the formatted data is formatted according to the Notification Engine processing requirements;
determining a notification logic comprising a plurality of notification triggers based on one or more rules and/or dynamic algorithms;
generating notification content by the Notification Engine based on the notification trigger;
capturing one or more user interactions with notifications for as interaction data for history tracking;
receiving a user customization input via a Notification Customization Module;
processing the user customization input and/or the interaction data by an Advanced Analytics and Machine Learning (AAML) Module to dynamically adapt notification logic;
iteratively refining notification content and delivery mechanisms based on user interaction data and redeploying enhanced notifications through a Distribution Module across multiple channels.

17. The method of claim 15, further comprising maintaining, by the RTDM, real-time synchronization with the source systems to enable current data accuracy.

18. The method of claim 15, further comprising orchestrating, by the Notification Engine, a workflow of notification generation from event detection to dispatch.

19. The method of claim 15, further comprising broadcasting notifications utilizing one or more communication protocols, the one or more protocols selected from MQTT and AMQP, and wherein the use of JSON schemas and XML formats for data interoperability across system boundaries.

20. The method of claim 15, receiving, by the Notification Customization Module one or more alert thresholds, notification frequency, and channel preferences input by the user.
